(19) Europäisches Patentamt
European Patent Office
Office européen des brevets

(11) EP 3 424 705 B1

# (12) EUROPEAN PATENT SPECIFICATION

(45) Date of publication and mention of the grant of the patent:
**22.03.2023 Bulletin 2023/12**

(21) Application number: **17760076.4**

(22) Date of filing: **01.03.2017**

(51) International Patent Classification (IPC):
***B32B 25/14*** (2006.01) ***B32B 27/00*** (2006.01)
***B32B 27/28*** (2006.01) ***C08F 210/18*** (2006.01)
***F16L 11/08*** (2006.01) ***B32B 25/04*** (2006.01)
***B32B 25/08*** (2006.01) ***B32B 25/16*** (2006.01)
***B32B 1/08*** (2006.01) ***B32B 27/26*** (2006.01)
***F02M 37/00*** (2006.01) ***B32B 7/10*** (2006.01)
***B32B 7/12*** (2006.01) ***F16L 11/04*** (2006.01)
***C08K 3/04*** (2006.01) ***C08K 3/22*** (2006.01)
***C08K 5/00*** (2006.01) ***C08K 5/17*** (2006.01)
***C08L 27/00*** (2006.01) ***C09K 3/10*** (2006.01)
***F16L 11/12*** (2006.01)

(52) Cooperative Patent Classification (CPC):
(C-Sets available)
**B32B 25/14; B32B 1/08; B32B 7/10; B32B 7/12; B32B 25/042; B32B 25/08; B32B 25/16; B32B 27/00; B32B 27/26; B32B 27/28; C08F 210/18; C08K 3/26; C08K 5/19; C09K 3/1009; F02M 35/10137;** (Cont.)

(86) International application number:
**PCT/JP2017/008112**

(87) International publication number:
**WO 2017/150612 (08.09.2017 Gazette 2017/36)**

## (54) LAMINATE AND APPLICATION FOR SAME

LAMINAT UND ANWENDUNG DAFÜR

STRATIFIÉ ET SON APPLICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.03.2016 JP 2016042340**

(43) Date of publication of application:
**09.01.2019 Bulletin 2019/02**

(73) Proprietor: **Mitsui Chemicals, Inc.**
**Minato-ku**
**Tokyo 105-7122 (JP)**

(72) Inventors:
- **KIKUCHI Yoshiharu**
**Ichihara-shi**
**Chiba 299-0108 (JP)**
- **ICHINO Kotaro**
**Ichihara-shi**
**Chiba 299-0108 (JP)**

(74) Representative: **J A Kemp LLP**
**80 Turnmill Street**
**London EC1M 5QU (GB)**

(56) References cited:
**WO-A1-02/16112**
**WO-A1-2015/122415**
**JP-A- 2002 256 121**
**JP-A- 2003 231 790**
**JP-A- 2007 098 900**
**JP-A- 2008 195 039**
**US-A- 4 764 562**
**US-A1- 2012 077 926**
**WO-A1-2015/122415**
**JP-A- S62 104 806**
**JP-A- 2002 256 121**
**JP-A- 2003 231 790**
**JP-A- 2007 098 900**
**JP-A- 2008 195 039**
**US-A1- 2003 207 118**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
**F02M 35/10321;** B32B 2250/02; B32B 2250/248; B32B 2264/102; B32B 2597/00; C08K 5/0025; F02M 35/10157; F16L 11/04

C-Sets
**C08K 3/26, C08L 23/0869;**
**C08K 3/26, C08L 23/16;**
**C08K 3/26, C08L 27/12;**
**C08K 5/19, C08L 23/0869;**
**C08K 5/19, C08L 23/16;**
**C08K 5/19, C08L 27/12;**
C08K 3/22, C08L 23/0869;
C08K 3/22, C08L 23/16

## Description

### TECHNICAL FIELD

The present invention relates to a layered product and a use thereof.

### BACKGROUND ART

Hoses formed with rubbers for industrial use are required to have various physical properties such as strength, flexibility, thermal resistance, bending resistance, and solvent resistance. It is difficult to satisfy all the required characteristics with one kind of rubber. For such reason, it is common to use rubbers having different properties in a stacked manner.

When different kinds of rubbers are stacked, a polar rubber may be directly bonded to a different rubber. However, it is common to bond a non-polar rubber via an adhesive layer.

Rubber hoses used for an engine of an automobile are required to have high levels of heat aging resistance, fatigue resistance, oil resistance, and the like. Therefore, hoses, in which expensive fluorine and acrylic rubbers are stacked, have been used. It has been common to bond a fluorine rubber and a non-polar rubber via an adhesive layer (see, for example, Patent Document 1). As a method of bonding without an adhesive layer, vulcanization bonding of a layer comprising a fluorine rubber and a vulcanizing agent and a layer comprising a non-fluorine rubber and a vulcanizing agent has been suggested (see, for example, Patent Document 2).

In recent years, engines for automobiles are increasingly downsized and equipped with a turbocharger for improving fuel efficiency. An engine with a turbocharger is configured so that air compressed by a compressor wheel is cooled by a charge air cooler and then sent to the engine, and the compressor wheel is connected to the charge air cooler by a rubber hose. This turbocharger hose is required to have high heat aging resistance because air at high pressure and high temperature (about 180°C) flows therethrough. It is also required to have fatigue resistance to withstand continuous pressure oscillation caused by the passage of the air. In such an application, a material with high heat aging resistance such as acrylic rubber and silicone elastomer is currently adopted.

Patent Document 3 describes a composition containing an ethylene/alkyl acrylate copolymer and a cured product of the composition, which is a product of vulcanizate exhibiting improved impact fatigue resistance and heat resistance in comparison with conventional vulcanizates.

Patent Document 4 proposes a tube-engagement structure including an innermost rubber layer and an envelope rubber layer, the innermost layer being made of a fluorocarbon rubber to exhibit excellent heat resistance and fatigue resistance and protect the inner layer of tubes from cracking, and the envelope layer being made of a rubber such as silicone rubber, acrylic rubber, and ethylene/acrylic-type rubber.

In addition, it has been usually difficult to bond a non-polar rubber such as an ethylene/propylene/diene rubber (EPDM) to a different material. Since EPDM is a non-polar rubber, a method of stacking layers via an adhesive layer has been common (see for example, Patent Document 5).

Patent Literature 6 describes a multi-layer article including a first polymer layer, a substrate and a bonding layer on a surface of the first polymer layer and in contact with the substrate. The first polymer layer comprises a fluoropolymer and the bonding layer comprises a fluoroelastomer which comprises a monomer segment derived from an olefinic hydrocarbon.

Patent Literature 7 is concerned with the provision of a laminate comprising a first layer rubber (a) and a second layer rubber (b) which is characterized in that a rubber composition (A) having an islands-in-sea structure between the same kind of rubber as the first layer rubber (a) and the same kind of rubber as the second layer rubber (b), is incorporated into the first layer rubber (a) and/or the second layer rubber (b).

Patent Literature 8 describes the formation of a heat-resistant air hose which has a tubular inner layer 1 and the outer layer 2 formed in contact with the peripheral surface of the inner layer 1. The inner layer 1 is formed by using a rubber composition containing iodine-containing fluororubber (A) having a fluorine content of 64-69 mass%, an organic peroxide crosslinking agent (B), triallyl isocyanurate (C), and a p-quinone dioxime compound (D) as indispensable components.

Patent Literature 9 describes a method for enhancing the bond strength between a VDF-containing fluoroplastic layer and an elastomer layer of a multi-layer article.

### CITATION LIST

### PATENT LITERATURE

Patent Literature 1: JP 2005-523181 A
Patent Literature 2: WO2003/039858 A
Patent Literature 3: JP 2009-500473 A
Patent Literature 4: JP 2013-221580 A
Patent Literature 5: JP 2014-162823 A
Patent Literature 6: US 2003/207118 A1
Patent Literature 7: JP 2007 098900
Patent Literature 8: JP 2008 195039 A
Patent Literature 9: WO 02/16112 A1

SUMMARY OF INVENTION

TECHNICAL PROBLEM

An object of this invention is to provide a layered product of a non-polar rubber or a rubber having a small polarity which makes it difficult to bond the rubber with a different material and a different kind of rubber, which are stacked directly or via an adhesive layer.

SOLUTION TO PROBLEM

As a result of intensive studies under such circumstances, the present inventors found the following layered products. This has led to the completion of this invention. The invention relates to the layered product according to claim 1 and the uses according to claims 7 and 8. Preferred embodiments are covered by the dependent claims.

ADVANTAGEOUS EFFECTS OF INVENTION

According to this invention, it is possible to provide a layered product of a non-polar rubber or a rubber having a small polarity which makes it difficult to bond the rubber with a different material and a different kind of rubber, which are stacked directly or via an adhesive layer.

DESCRIPTION OF EMBODIMENTS

Hereinafter, this invention will be described in detail.

[Layered product]

The layered product of this invention is a layered product, which includes at least one type of layer selected from the following layer (1), and further includes at least one type of layer selected from the following layers (3) and (4), wherein at least one layer of the at least one type of layer selected from the layer (1) is directly in contact with or adjacent via an adhesive layer to at least one layer of the at least one type of layer selected from the layers (3) and (4). The products of the invention can further comprise a layer (2).

Layer (1): a layer prepared using an ethylene/propylene/non-conjugated polyene copolymer
Layer (2): a layer prepared using an ethylene/carboxylic acid copolymer
Layer (3): a layer prepared using an acrylic rubber
Layer (4): a layer prepared using a halogen-containing polymer

Hereinafter, the layered product of this invention will be described in detail after describing each of polymers used for preparing the layers (1) to (4).

(Ethylene/propylene/non-conjugated polyene copolymer)

The ethylene/propylene/non-conjugated polyene copolymer has structural units derived from ethylene, propylene, and 5-vinyl-2-norbornene (VNB).

The use of propylene is preferable because it is relatively inexpensive in raw material cost, and provides not only an ethylene/propylene/non-conjugated polyene copolymer excellent in mechanical properties but also a layered product exhibiting rubber elasticity.

Examples of a non-conjugated polyene include 5-vinyl-2-norbornene (VNB), norbornadiene, 1,4-hexadiene,

dicyclopentadiene, 5-ethylidene-2-norbornene (ENB), 5-methylene-2-norbornene, 5-(2-propenyl)-2-norbornene, 5-(3-butenyl)-2-norbornene, 5-(1-methyl-2-propenyl)-2-norbornene, 5-(4-pentenyl)-2-norbornene, 5-(1-methyl-3-butenyl)-2-norbornene, 5-(5-hexenyl)-2-norbornene, 5-(1-methyl-4-pentenyl)-2-norbornene, 5-(2,3-dimethyl-3-butenyl)-2-norbornene, 5-(2-ethyl-3-butenyl)-2-norbornene, 5-(6-heptenyl)-2-norbornene, 5-(3-methyl-5-hexenyl)-2-norbornene, 5-(3,4-dimethyl-4-pentenyl)-2-norbornene, 5-(3-ethyl-4-pentenyl)-2-norbornene, 5-(7-octenyl)-2-norbornene, 5-(2-methyl-6-heptenyl)-2-norbornene, 5-(1,2-dimethyl-5-hexenyl)-2-norbornene, 5-(5-ethyl-5-hexenyl)-2-norbornene, 5-(1,2,3-trimethyl-4-pentenyl)-2-norbornene.

The non-conjugated polyenes may be used singly or in combination of the two or more kinds.

In other words, the ethylene/propylene/non-conjugated polyene copolymer contains a structural unit derived from at least one kind of non-conjugated polyene, and may contain a structural unit derived from two or more kinds of non-conjugated polyenes.

A non-conjugated polyene is VNB from the viewpoint that it is easily available and excellent in crosslinking reactivity with organic peroxide during its crosslinking reaction after polymerization, enabling a layered product to have excellent thermal resistance and fatigue resistance. In other words, the ethylene/propylene/non-conjugated polyene copolymer has a VNB-derived structural unit. A VNB-derived structural unit in the ethylene/propylene/non-conjugated polyene copolymer accounts for preferably from 0.07% to 10% by mass, more preferably from 0.1% to 8.0% by mass, and most preferably from 0.5% to 5.0% by mass with respect to 100% by mass of the ethylene/propylene/non-conjugated polyene copolymer.

In addition, a non-conjugated polyene is preferably ENB from the viewpoint that it is easily available and excellent in crosslinking reactivity with sulfur or a vulcanization enhancer during its crosslinking reaction after polymerization, facilitating control of the crosslinking rate and achievement of favorable mechanical physical properties. In other words, it is preferable for the ethylene/propylene/non-conjugated polyene copolymer to have an ENB-derived structural unit.

The ethylene/propylene/non-conjugated polyene copolymer satisfies the requirements (I) to (III).

Requirement (I) : a molar ratio of a structural unit derived from ethylene and a structural unit derived from propylene (ethylene/propylene) is from 40/60 to 99.9/0.1.

Requirement (II): a structural unit derived from a non-conjugated polyene accounts for 0.07% to 10% by mass with respect to 100% by mass of the ethylene/propylene/non-conjugated polyene copolymer.

Requirement (III): an intrinsic viscosity [η]measured in decalin at 135°C is from 1.0 to 4.0dl/g.

(Requirement (I))

Requirement (I) is to specify that a molar ratio of a structural unit derived from ethylene and a structural unit derived from propylene (ethylene/propylene) is from 40/60 to 99.9/0.1.

The molar ratio of a structural unit derived from ethylene and a structural unit derived from propylene (ethylene/propylene) is preferably from 55/45 to 85/15 and more preferably from 55/45 to 78/22.

When the ethylene/propylene ratio falls within the above range, a layer comprising a crosslinked article which is obtained by crosslinking an ethylene/propylene/non-conjugated polyene copolymer not only exhibits excellent rubber elasticity, but also is excellent in mechanical strength and flexibility. In addition, the ethylene/propylene/non-conjugated polyene copolymer not only exhibits excellent rubber elasticity, but also is excellent in mechanical strength and flexibility within the above range, which is preferable.

The molar ratio of a structural unit derived from ethylene and a structural unit derived from propylene in the ethylene/propylene/non-conjugated polyene copolymer can be determined by using $^{13}$C-NMR.

(Requirement (II))

Requirement (II) is to specify that a structural unit derived from a non-conjugated polyene accounts for 0.07% to 10% by mass with respect to 100% by mass of the ethylene/propylene/non-conjugated polyene copolymer.

The amount of a structural unit derived from a non-conjugated polyene accounts for preferably from 0.1% to 8.0% by mass and particularly preferably from 0.5% to 5.0% by mass. The ethylene/propylene/non-conjugated polyene copolymer having a structural unit derived from a non-conjugated polyene within the above range is preferable because it has sufficient hardness and excellent mechanical strength, and such ethylene/propylene/non-conjugated polyene copolymer is also preferable because it enables obtaining a crosslinked article having a large crosslinking density such that hardness of a layer comprising the crosslinked article can be improved.

The amount of a structural unit derived from a non-conjugated polyene can be determined by using $^{13}$C-NMR.

(Requirement (III))

Requirement (III) is to specify that an intrinsic viscosity [η]of the ethylene/propylene/non-conjugated polyene

copolymer measured in decalin at 135°C is from 1.0 to 4.0 dl/g.

The intrinsic viscosity [η]is more preferably from 1.5 to 4.0dl/g. When the intrinsic viscosity is within the above range, a favorable balance between physical properties and processability is achieved, which is preferable.

Intrinsic viscosity can be measured by the method described in the Examples.

In addition, the ethylene/propylene/non-conjugated polyene satisfies the following requirement (IV).

(Requirement (IV))

Requirement (IV) is to specify that a B value expressed by the following formula (i) for the ethylene/propylene/non-conjugated polyene copolymer is 1.20 or more.

$$B\ value = ([EX] + 2[Y])/[2 \times [E] \times ([X] + [Y])] \quad (i)$$

[where [E], [X], and [Y] represent molar fractions of ethylene, an α-olefin, and a non-conjugated polyene, respectively, and [EX] represents an ethylene-propylene diad chain fraction]

The B value is more preferably from 1.20 to 1.40 and particularly preferably from 1.20 to 1.25.

When the B value is within the above range, the ethylene/propylene/non-conjugated polyene copolymer has a low compression permanent set at low temperature, and thus, an excellent balance between rubber elasticity at low temperature and tensile strength at ordinary temperature is achieved, which is preferable.

In a case in which the B value of the ethylene/propylene/non-conjugated polyene copolymer is 1.20 or more, and the non-conjugated polyene is VNB, the layered product of this invention tends to have particularly excellent fatigue resistance, which is preferable.

Note that the B value is an index showing random nature of copolymerized monomer sequence distribution in the copolymer, and [E], [X], [Y], and [EX] in the above formula (i) can be obtained by $^{13}C$-NMR spectral measurement based on the report of J. C. Randall [Macromolecules, 15, 353 (1982)], J. Ray [Macromolecules, 10, 773 (1977)], et al.

The amount of propylene (content of a structural unit derived from an propylene) and the amount of a non-conjugated polyene (content of a structural unit derived from a non-conjugated polyene) in the ethylene/propylene/non-conjugated polyene copolymer can be determined by using $^{13}C$-NMR.

The ethylene/propylene/non-conjugated polyene copolymer has a structural unit derived from ethylene, a structural unit derived from propylene, and a structural unit derived from a non-conjugated polyene as described above. However, it may have a structural unit derived from a different monomer (a monomer other than ethylene, propylene, and a non-conjugated polyene) within a range unharmful to the effects of this invention. A structural unit derived from a different monomer accounts for preferably 30% by mass or less, more preferably 25% by mass or less, and particularly preferably 20% by mass or less of 100% by mass with respect to the ethylene/propylene/non-conjugated polyene copolymer. Examples of such different monomer include styrene and acetic acid vinyl.

The ethylene/propylene/non-conjugated polyene copolymer also has a weight-average molecular weight (Mw) within a range preferably from 10,000 to 600,000, more preferably from 30,000 to 500,000, and still more preferably from 50,000 to 400, 000. The molecular weight distribution (Mw/Mn) of the ethylene/propylene/non-conjugated polyene copolymer is preferably from 1.8 to 30, more preferably from 1.8 to 25.0, still more preferably from 2.0 to 20.0. Mw and Mw/Mn can be obtained as a numerical value in terms of polystyrene measured by using gel permeation chromatography (GPC).

For example, in an application of the layered product of this invention for a heat-resistant hose, such as a turbocharger hose for an automobile, an ethylene/propylene/non-conjugated polyene copolymer having a relatively high molecular weight can be suitably used, and specifically, an ethylene/propylene/non-conjugated polyene copolymer having a weight-average molecular weight (Mw) of 100,000 to 600,000 can be suitably used.

<Method for producing ethylene/propylene/non-conjugated polyene copolymer>

The ethylene/propylene/non-conjugated polyene copolymer is a copolymer obtained by copolymerizing monomers consisting of ethylene, propylene, and a non-conjugated polyene.

Although the ethylene/propylene/non-conjugated polyene copolymer of this invention may be prepared by any production method, it is preferably a copolymer obtained by copolymerizing monomers in the presence of a metallocene compound, more preferably a copolymer obtained by copolymerizing monomers in the presence of a catalyst system containing a metallocene compound.

(Metallocene compound)

The ethylene/propylene/non-conjugated polyene copolymer is desirably a copolymer obtained by copolymerizing monomers in the presence of at least one kind of metallocene compound selected from compounds represented by the following general formula [A1]. The copolymerization of monomers carried out by using a catalyst system containing such a metallocene compound yields a copolymer containing suppressed long-chain branching, facilitating preparing the ethylene/propylene/non-conjugated polyene copolymer.

[Chem 1]

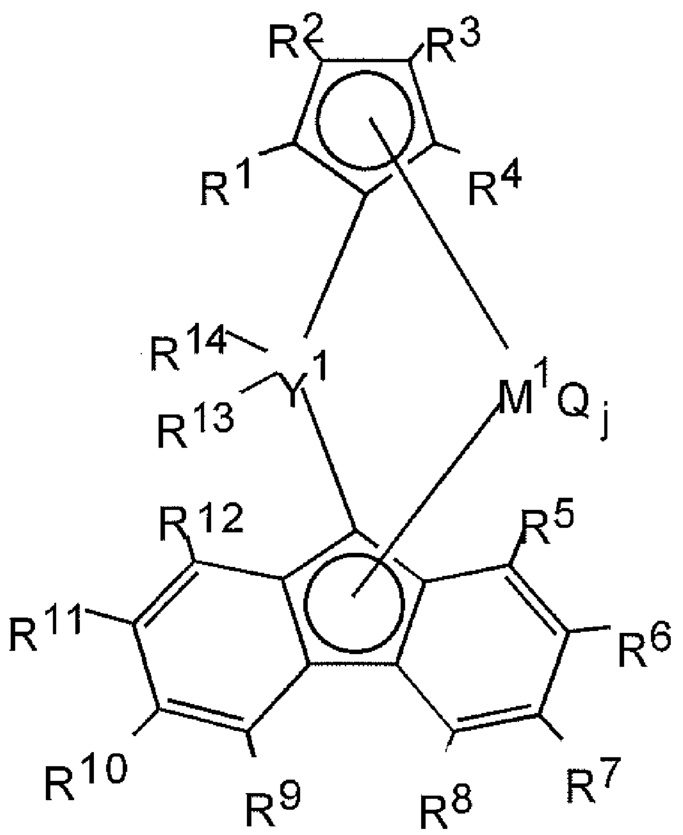

··· [A 1]

In the above formula [A1], $R^1$, $R^2$, $R^3$, $R^4$, $R^5$, $R^8$, $R^9$, and $R^{12}$ are each independently a hydrogen atom, a hydrocarbon group, a silicon-containing group, or a heteroatom-containing group other than any silicon-containing group, and among $R^1$ to $R^4$, adjacent two groups may together form a ring.

The hydrocarbon group is preferably a hydrocarbon group having 1 to 20 carbon atoms, and specific examples thereof include an alkyl group having 1 to 20 carbon atoms, an arylalkyl group having 7 to 20 carbon atoms, an aryl group or substituted aryl group having 6 to 20 carbon atoms, and the like. For example, they include methyl, ethyl, n-propyl, isopropyl, allyl, n-butyl, iso-butyl, sec-butyl, t-butyl, amyl, n-pentyl, neopentyl, n-hexyl, n-heptyl, n-octyl, n-nonyl, n-decanyl, 3-methylpentyl, 1,1-diethylpropyl, 1,1-dimethylbutyl, 1-methyl-1-propyl butyl, 1,1-dipropyl butyl, 1,1-dimethyl-2-methyl propyl, 1-methyl-1-isopropyl-2-methyl propyl, cyclopentyl, cyclohexyl, cycloheptyl, cyclooctyl, norbornyl, adamantyl, phenyl, o-tolyl, m-tolyl, p-tolyl, xylyl, isopropylphenyl, t-butylphenyl, naphthyl, biphenyl, terphenyl, phenanthryl, anthracenyl, benzyl, and cumyl groups.

The above hydrocarbon group may have a hydrogen atom substituted by a halogen atom, and examples thereof include trifluoromethyl, trifluoromethylphenyl, pentafluorophenyl, and chlorophenyl groups.

Examples of the silicon-containing group include silyl, siloxy, hydrocarbon-substituted silyl, and hydrocarbon-substituted siloxy groups. For example, they include methylsilyl, dimethylsilyl, trimethylsilyl, ethylsilyl, diethylsilyl, triethylsilyl, diphenylmethylsilyl, triphenylsilyl, dimethylphenylsilyl, dimethyl-t-butylsilyl, dimethyl(pentafluorophenyl)silyl groups,

and the like.

Examples of heteroatom-containing groups other than silicon-containing groups include: oxygen-containing groups such as methoxy, ethoxy, and phenoxy groups; nitrogen-containing groups such as nitro, cyano, N-methylamino, N,N-dimethylamino, and N-phenyl amino groups; boron-containing groups such as boranetriyl and diboranyl groups; and sulfur-containing groups such as sulfonyl and sulphenyl groups.

$R^6$ and $R^{11}$ are the same atom or the same group selected from a hydrogen atom, a hydrocarbon group, a silicon-containing group, and a heteroatom-containing group other than any silicon-containing group, $R^7$ and $R^{10}$ are the same atom or the same group selected from a hydrogen atom, a hydrocarbon group, a silicon-containing group, and a heteroatom-containing group other than any silicon-containing group, $R^6$ and $R^7$ may together form a ring, and $R^{10}$ and $R^{11}$ may together form a ring. However, all of $R^6$, $R^7$, $R^{10}$, and $R^{11}$ are not a hydrogen atom simultaneously.

$R^{13}$ and $R^{14}$ each independently represent an aryl group.

$M^1$ represents a zirconium atom.

$Y^1$ represents a carbon atom or a silicon atom.

Q represents a halogen atom, a hydrocarbon group, a halogenated hydrocarbon group, a neutral conjugated or non-conjugated diene having 4 to 20 carbon atoms, and a neutral ligand coordinatable by an anionic ligand or a lone pair, and j represents an integer from 1 to 4, and when j is an integer of two or more a plurality of Qs may be the same or different from each other.

Examples of the halogen atom include a fluorine atom, a chlorine atom, a bromine atom, and an iodine atom, and the chlorine atom is preferable.

The hydrocarbon groups are preferably those having 1 to 10 carbon atoms, and specific examples thereof include methyl, ethyl, n-propyl, isopropyl, 2-methylpropyl, 1,1-dimethylpropyl, 2,2-dimethylpropyl, 1,1-diethylpropyl, 1-ethyl-1-methylpropyl, 1,1,2,2-tetramethylpropyl, sec-butyl, t-butyl, 1,1-dimethylbutyl, 1,1,3-trimethylbutyl, neopentyl, cyclohexylmethyl, cyclohexyl, 1-methyl-1-cyclohexyl, benzyl groups, and the like, and methyl, ethyl, and benzyl groups are preferable.

Halogenated hydrocarbon groups are preferably halogenated hydrocarbon groups having 1 to 10 carbon atoms. Specific examples thereof include trifluoromethyl, trifluoromethylphenyl, pentafluorophenyl, and chlorophenyl groups.

The neutral conjugated or non-conjugated diene having 4 to 20 carbon atoms is preferably a neutral conjugated or non-conjugated diene having 4 to 10 carbon atoms. Specific examples of the neutral conjugated or non-conjugated diene include s-cis- or s-trans-$\eta$4-1,3-butadiene, s-cis- or s-trans-$\eta$4-1,4-diphenyl-1,3-butadiene, s-cis- or s-trans-$\eta$4-3-methyl-1,3-pentadiene, s-cis- or s-trans-$\eta$4-1,4-dibenzyl-1,3-butadiene, s-cis- or s-trans-$\eta$4-2,4-hexadiene, s-cis- or s-trans-$\eta$4-1,3-pentadiene, s-cis- or s-trans-$\eta$4-1,4-ditoryl-1,3-butadiene, s-cis- or s-trans-$\eta$4-1,4-bis(trimethylsilyl)-1,3-butadiene.

Specific examples of the anionic ligand include alkoxy groups, such asmethoxy, t-butoxy, and phenoxy groups, carboxylate groups, such as acetate and benzoate groups, and sulfonate groups, such as mesylate and tosylate groups.

Specific examples of the neutral ligand coordinatable by a lone pair include organic phosphorus compounds, such as trimethylphosphine, triethylphosphine, triphenylphosphine, and diphenylmethylphosphine, or ethers, such as tetrahydrofuran, diethylether, dioxane, and 1,2-dimethoxyethane.

Examples of the cyclopentadienyl group having substituents from $R^1$ to $R^4$ in the formula [A1] include, but are not limited to, non-substituted cyclopentadienyl groups having substituents from $R^1$ to $R^4$ which are a hydrogen atom, cyclopentadienyl groups monosubstituted at position 3, such as 3-t-butylcyclopentadienyl, 3-methylcyclopentadienyl, 3-trimethylsilylcyclopentadienyl, 3-phenylcyclopentadienyl, 3-adamantylcyclopentadienyl, 3-amylcyclopentadienyl, and 3-cyclohexylcyclopentadienyl groups, and cyclopentadienyl groups disubstituted at positions 3 and 5, such as 3-t-butyl-5-methylcyclopentadienyl, 3-t-butyl-5-ethylcyclopentadienyl, 3-phenyl-5-methylcyclopentadienyl, 3,5-di-t-butylcyclopentadienyl, 3,5-dimethylcyclopentadienyl, 3-phenyl-5-methylcyclopentadienyl, and 3-trimethylsilyl-5-methylcyclopentadienyl groups. The non-substituted cyclopentadienyl groups ($R^1$ to $R^4$ are a hydrogen atom) are preferable from the view point of easiness to synthesize metallocene compounds, and their production cost and copolymerization ability for non-conjugated polyenes.

Examples of a fluorenyl group having the substituents from $R^5$ to $R^{12}$ in the formula [A1] include, but are not limited to, fluorenyl groups monosubstituted at position 2, such as 2-methylfluorenyl, 2-t-butylfluorenyl, and 2-phenylfluorenyl groups, fluorenyl groups monosubstituted at position 4, such as 4-methylfluorenyl, 4-t-butylfluorenyl, and 4-phenylfluorenyl groups, and fluorenyl groups disubstituted at positions 2 and 7 or 3 and 6, such as 2,7-di-t-butylfluorenyl, and 3,6-di-t-butylfluorenyl groups, fluorenyl groups tetrasubstituted at positions 2, 3, 6, and 7, such as 2,7-dimethyl-3,6-di-t-butylfluorenyl, and 2,7-diphenyl-3,6-di-t-butylfluorenyl groups, and fluorenyl groups tetrasubstituted at positions 2, 3, 6, and 7 in which $R^6$ together with $R^7$ and $R^{10}$ together with $R^{11}$ each form a ring, as represented by the formulae [V-I] and [V-II].

[Chem 2]

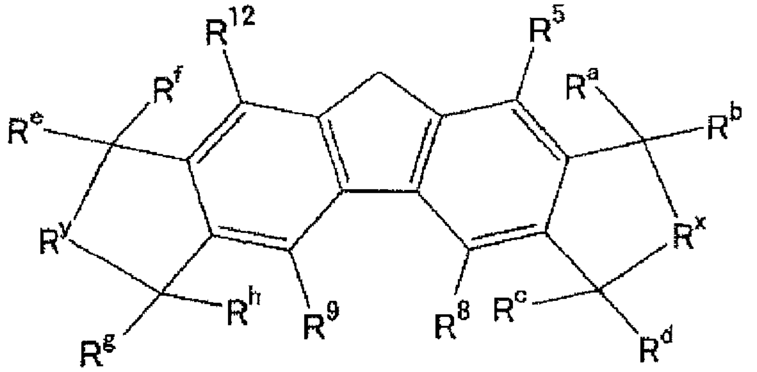

• • • [V—I]

[Chem 3]

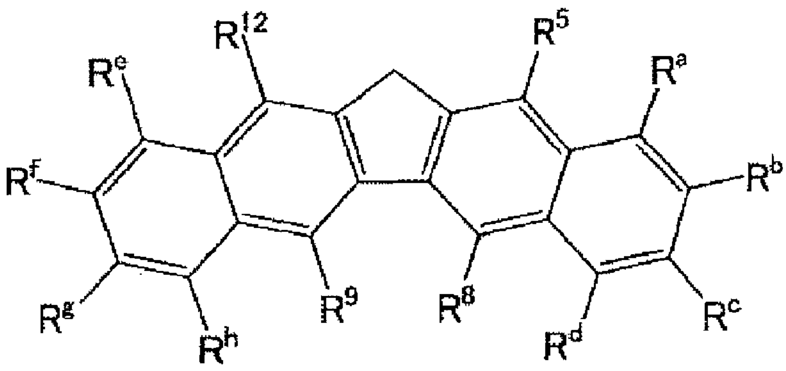

• • • [V—II]

In the formulae [V-I] and [V-II], $R^5$, $R^8$, $R^9$, and $R^{12}$ are the same as the definitions in the formula [A1], $R^a$, $R^b$, $R^c$, $R^d$, $R^e$, $R^f$, $R^g$, and $R^h$ are each independently a hydrogen atom or an alkyl group having 1 to 5 carbon atoms, and each may bond to an adjacent substituent to form together a ring. The alkyl groups are specifically exemplified by methyl, ethyl, n-propyl, isopropyl, n-butyl, t-butyl, amyl, and n-pentyl groups. In the formula [V-I], $R^x$ and $R^y$ are each independently a hydrocarbon group having 1 to 3 carbon atoms which may have an unsaturated bond, $R^x$ may form a double-bond together with a carbon atom to which $R^a$ or $R^c$ bonds, $R^y$ may form a double-bond together with a carbon atom to which $R^e$ or $R^g$ bonds, and $R^x$ and $R^y$ are both preferably a saturated or unsaturated hydrocarbon group having one or two carbon atoms.

Specific examples of the compounds represented by the formula [V-I] or [V-II] include octamethyloctahydrodibenzofluorenyl group represented by the formula [V-III], tetramethyldodecahydrodibenzofluorenyl group represented by the formula [V-IV], octamethyltetrahydrodicyclopentafluorenyl group represented by the formula [V-V], hexamethyldihydrodicyclopentafluorenyl group represented by the formula [V-VI], and b,h-dibenzofluorenyl group represented by the formula [V-VII].

[Chem 4]

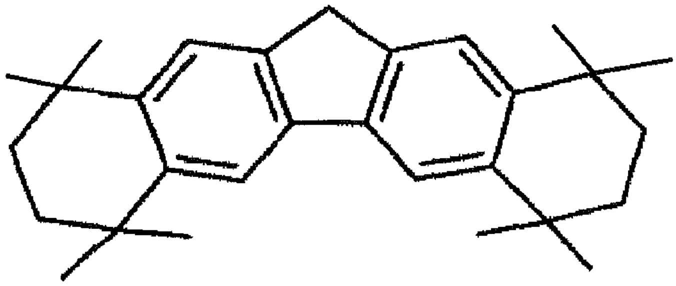

・・・ [V−III]

[Chem 5]

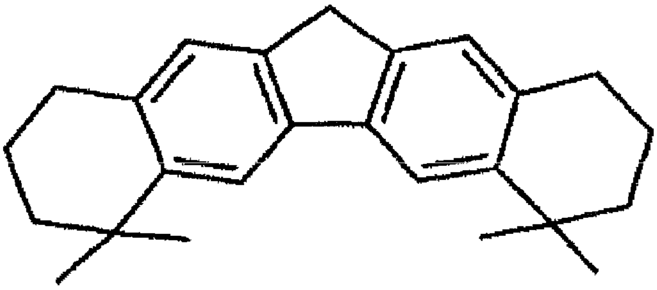

・・・ [V−IV]

[Chem 6]

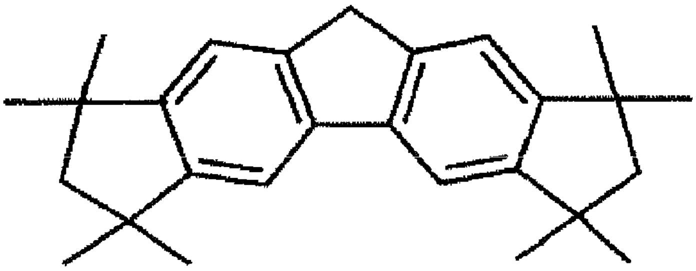

・・・ [V−V]

[Chem 7]

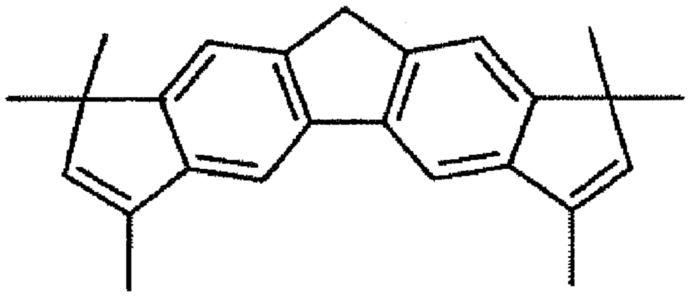

・・・[V—VI]

[Chem 8]

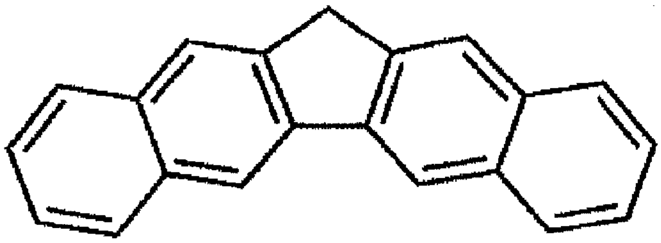

・・・[V—VII]

A metallocene compound containing any of these fluorenyl groups and represented by the general formula [A1] is excellent in copolymerization ability for non-conjugated polyene, and when $Y^1$ is a silicon atom, transition metal compounds are particularly excellent which have any of a fluorenyl group disubstituted at positions 2 and 7, a fluorenyl group disubstituted at positions 3 and 6, a fluorenyl group tetrasubstituted at positions 2, 3, 6, and 7, and a fluorenyl group tetrasubstituted at positions 2, 3, 6, and 7 represented by the above general formula [V-I] . When $Y^1$ is a carbon atom, metallocene compounds are particularly excellent which have any of a non-substituted fluorenyl group in which $R^5$ to $R^{12}$ are a hydrogen atom, a fluorenyl group disubstituted at positions 3 and 6, a fluorenyl group tetrasubstituted at positions 2, 3, 6, and 7, and a fluorenyl group tetrasubstituted at position 2, 3, 6, and 7 represented by the above general formula [V-I].

In this invention, in a metallocene compound represented by the general formula [A1], when $Y^1$ is a silicon atom, with all substituents from $R^5$ to $R^{12}$ being a hydrogen atom, $R^{13}$ and $R^{14}$ are preferably selected from groups other than methyl, butyl, phenyl, silicon-substituted phenyl, cyclohexyl, and benzyl groups;

when $Y^1$ is a silicon atom, with both $R^6$ and $R^{11}$ being t-butyl group, and $R^5$, $R^7$, $R^8$, $R^9$, $R^{10}$, and $R^{12}$ not being t-butyl group, $R^{13}$ and $R^{14}$ are preferably selected from groups other than benzyl group, and silicon-substituted phenyl group;

when $Y^1$ is a carbon atom, with all substituents from $R^5$ to $R^{12}$ being a hydrogen atom, $R^{13}$ and $R^{14}$ are preferably selected from groups other than methyl, isopropyl, t-butyl, isobutyl, phenyl, p-t-butylphenyl, p-n-butylphenyl, silicon-substituted phenyl, 4-biphenyl, p-tolyl, naphthyl, benzyl, cyclopentyl, cyclohexyl, and xylyl groups;

when $Y^1$ is a carbon atom, with $R^6$ and $R^{11}$ being the same group selected from t-butyl, methyl, and phenyl groups, and being a different group or atom from $R^5$, $R^7$, $R^8$, $R^9$, $R^{10}$, and $R^{12}$, $R^{13}$ and $R^{14}$ are preferably selected from groups other than methyl, phenyl, p-t-butylphenyl, p-n-butylphenyl, silicon-substituted phenyl, and benzyl groups;

when $Y^1$ is a carbon atom, with $R^6$ being dimethylamino, methoxy, or methyl group, and $R^5$, $R^7$, $R^8$, $R^9$, $R^{10}$, $R^{11}$, and $R^{12}$ being a different group or atom from $R^6$, $R^{13}$ and $R^{14}$ are preferably selected from groups other than methyl and phenyl groups; and

when $Y^1$ is a carbon atom, with sites constituted by a fluorenyl group and substituents from $R^5$ to $R^{12}$ being b,h-dibenzofluorenyl or a, i-dibenzofluorenyl groups, $R^{13}$ and $R^{14}$ are preferably selected from groups other than methyl and phenyl groups.

Although specific examples of the metallocene compound represented by the formula [A1] in this invention will be described below, the scope of the invention is not particularly limited thereby.

Specific examples of the metallocene compound represented by the formula [A1] in the invention include,

when $Y^1$ is a silicon atom,
diphenylsilylene(cyclopentadienyl)(2,7-di-t-butylfluore nyl)zirconium dichloride,
diphenylsilylene(cyclopentadienyl)(3,6-di-t-butylfluore nyl)zirconium dichloride,
diphenylsilylene(cyclopentadienyl)(2,7-dimethyl-3,6-dit-butylfluorenyl)zirconium dichloride,
diphenylsilylene(cyclopentadienyl)(2,7-diphenyl-3,6-dit-butyl fluorenyl)zirconium dichloride,
diphenylsilylene(cyclopentadienyl)(octamethyloctahydrod ibenzofluorenyl)zirconium dichloride,
diphenylsilylene(cyclopentadienyl)(tetramethyldodecahyd )zirconium dichloride,
diphenylsilylene(cyclopentadienyl)(octamethyltetrahydro dicyclopentafluorenyl)zirconium dichloride,
diphenylsilylene(cyclopentadienyl)(hexamethyldihydrodic yclopentafluorenyl)zirconium dichloride,
diphenylsilylene(cyclopentadienyl)(b,h-dibenzofluorenyl )zirconium dichloride
di(p-tolyl)silylene(cyclopentadienyl) (fluorenyl)zirconi um dichloride,
di(p-tolyl)silylene(cyclopentadienyl) (2,7-di-t-butylflu orenyl)zirconium dichloride,
di(p-tolyl)silylene(cyclopentadienyl) (3,6-di-t-butylflu orenyl)zirconium dichloride,
di(p-tolyl)silylene(cyclopentadienyl) (2,7-dimethyl-3,6-di-t-butylfluorenyl)zirconium dichloride,
di(p-tolyl)silylene(cyclopentadienyl) (2,7-diphenyl-3,6-di-t-butylfluorenyl)zirconium dichloride,
di(p-tolyl)silylene(cyclopentadienyl) (octamethyloctahyd rodibenzofluorenyl)zirconium dichloride,
di(p-tolyl)silylene(cyclopentadienyl) (tetramethyldodeca hydrobenzofluorenyl)zirconium dichloride,
di(p-tolyl)silylene(cyclopentadienyl) (octamethyltetrahy drodicyclopentafluorenyl)zirconium dichloride,
di(p-tolyl)silylene(cyclopentadienyl) (hexamethyldihydro dicyclopentafluorenyl)zirconium dichloride,
di(p-tolyl)silylene(cyclopentadienyl) (b,h-dibenzofluore nyl)zirconium dichloride,
di(m-tolyl)silylene(cyclopentadienyl) (fluorenyl)zirconi um dichloride,
di(m-tolyl)silylene(cyclopentadienyl) (2,7-di-t-butylflu orenyl)zirconium dichloride,
di(m-tolyl)silylene(cyclopentadienyl) (3,6-di-t-butyl fluorenyl)zirconium dichloride,
di(m-tolyl)silylene(cyclopentadienyl) (2,7-dimethyl-3,6-di-t-butylfluorenyl)zirconium dichloride,
di(m-tolyl)silylene(cyclopentadienyl) (2,7-diphenyl-3,6-di-t-butylfluorenyl)zirconium dichloride,
di(m-tolyl)silylene(cyclopentadienyl) (octamethyloctahyd rodibenzofluorenyl)zirconium dichloride,
di(m-tolyl)silylene(cyclopentadienyl) (tetramethyldodeca hydrobenzofluorenyl)zirconium dichloride,
di(m-tolyl)silylene(cyclopentadienyl) (octamethyltetrahy drodicyclopentafluorenyl)zirconium dichloride,
di(m-tolyl)silylene(cyclopentadienyl) (hexamethyldihydro dicyclopentafluorenyl)zirconium dichloride, and
di(m-tolyl)silylene(cyclopentadienyl) (b,h-dibenzofluore nyl)zirconium dichloride.

When $Y^1$ is a carbon atom, they include

diphenylmethylene(cyclopentadienyl)(3,6-di-t-butylfluor enyl)zirconium dichloride,
diphenylmethylene(cyclopentadienyl)(2,7-dimethyl-3,6-di -t-butylfluorenyl)zirconium dichloride,
diphenylmethylene(cyclopentadienyl)(2,7-diphenyl-3,6-di -t-butylfluorenyl)zirconium dichloride,
diphenylmethylene(cyclopentadienyl)(octamethyloctahydro dibenzofluorenyl)zirconium dichloride,
diphenylmethylene(cyclopentadienyl)(tetramethyldodecahy drodibenzofluorenyl)zirconium dichloride,
diphenylmethylene(cyclopentadienyl)(octamethyltetrahydr odicyclopentafluorenyl)zirconium dichloride,
diphenylmethylene(cyclopentadienyl)(hexamethyldihydrodi cyclopentafluorenyl)zirconium dichloride,
diphenylmethylene(cyclopentadienyl)(b,h-dibenzofluoreny l)zirconium dichloride,
di(p-tolyl)methylene(cyclopentadienyl)(2,7-di-t-butylfl uorenyl)zirconium dichloride,
di(p-tolyl)methylene(cyclopentadienyl)(3,6-di-t-butylfl uorenyl)zirconium dichloride,
di(p-tolyl)methylene(cyclopentadienyl)(2,7-dimethyl-3,6 -di-t-butylfluorenyl)zirconium dichloride,
di(p-tolyl)methylene(cyclopentadienyl)(2,7-diphenyl-3,6 -di-t-butylfluorenyl)zirconium dichloride,
di(p-tolyl)methylene(cyclopentadienyl)(octamethyloctahy drodibenzofluorenyl)zirconium dichloride,
di(p-tolyl)methylene(cyclopentadienyl)(tetramethyldodec ahydrodibenzofluorenyl)zirconium dichloride,
di(p-tolyl)methylene(cyclopentadienyl)(octamethyltetrah ydrodicyclopentafluorenyl)zirconium dichloride,
di(p-tolyl)methylene(cyclopentadienyl)(hexamethyldihydr odicyclopentafluorenyl)zirconium dichloride,
di(p-tolyl)methylene(cyclopentadienyl)(b,h-dibenzofluor enyl)zirconium dichloride,
di(m-tolyl)methylene(cyclopentadienyl)(fluorenyl)zircon ium dichloride,
di(m-tolyl)methylene(cyclopentadienyl)(2,7-di-t-butylfl uorenyl)zirconium dichloride,
di(m-tolyl)methylene(cyclopentadienyl)(3,6-di-t-butylfl uorenyl)zirconium dichloride,
di(m-tolyl)methylene(cyclopentadienyl)(2,7-dimethyl-3,6 -di-t-butylfluorenyl)zirconium dichloride,

di(m-tolyl)methylene(cyclopentadienyl)(2,7-diphenyl-3,6 -di-t-butylfluorenyl)zirconium dichloride,
di(m-tolyl)methylene(cyclopentadienyl)(octamethyloctahy drodibenzofluorenyl)zirconium dichloride,
di(m-tolyl)methylene(cyclopentadienyl)(tetramethyldodec ahydrobenzofluorenyl)zirconium dichloride,
di(m-tolyl)methylene(cyclopentadienyl)(octamethyltetrah ydrodicyclopentafluorenyl)zirconium dichloride,
di(m-tolyl)methylene(cyclopentadienyl)(hexamethyldihydr odicyclopentafluorenyl)zirconium dichloride,
di(m-tolyl)methylene(cyclopentadienyl)(b,h-dibenzofluor enyl)zirconium dichloride,
di(p-t-butylphenyl)methylene(cyclopentadienyl)(3,6-di-t -butylfluorenyl)zirconium dichloride,
di(p-t-butylphenyl)methylene(cyclopentadienyl)(2,7-dime thyl-3,6-di-t-butylfluorenyl)zirconium dichloride,
di(p-t-butylphenyl)methylene(cyclopentadienyl)(2,7-diph enyl-3,6-di-t-butylfluorenyl)zirconium dichloride,
di(p-t-butylphenyl)methylene(cyclopentadienyl)(octameth yloctahydrodibenzofluorenyl)zirconium dichloride,
di(p-t-butylphenyl)methylene(cyclopentadienyl)(tetramet hyldodecahydrodibenzofluorenyl)zirconium dichloride,
di(p-t-butylphenyl)methylene(cyclopentadienyl)(octameth yltetrahydrodicyclopentafluorenyl)zirconium dichloride,
di(p-t-butylphenyl)methylene(cyclopentadienyl)(hexameth yldihydrodicyclopentafluorenyl)zirconium dichloride,
di(p-t-butylphenyl)methylene(cyclopentadienyl)(b,h-dibe nzofluorenyl)zirconium dichloride,
di(4-biphenyl)methylene(cyclopentadienyl)(2,7-di-t-buty lfluorenyl)zirconium dichloride,
di(4-biphenyl)methylene(cyclopentadienyl)(3,6-di-t-buty lfluorenyl)zirconium dichloride,
di(4-biphenyl)methylene(cyclopentadienyl)(2,7-dimethyl-3,6-di-t-butylfluorenyl)zirconium dichloride,
di(4-biphenyl)methylene(cyclopentadienyl)(2,7-diphenyl-3,6-di-t-butylfluorenyl)zirconium dichloride,
di(4-biphenyl)methylene(cyclopentadienyl)(octamethyloct ahydrodibenzofluorenyl)zirconium dichloride,
di(4-biphenyl)methylene(cyclopentadienyl)(tetramethyldo decahydrodibenzofluorenyl)zirconium dichloride,
di(4-biphenyl)methylene(cyclopentadienyl)(octamethyltet rahydrodicyclopentafluorenyl)zirconium dichloride,
di(4-biphenyl)methylene(cyclopentadienyl)(hexamethyldih ydrodicyclopentafluorenyl)zirconium dichloride,
di(4-biphenyl)methylene(cyclopentadienyl)(b,h-dibenzofl uorenyl)zirconium dichloride,
di(p-chlorophenyl)methylene(cyclopentadienyl)(fluorenyl )zirconium dichloride,
di(p-chlorophenyl)methylene(cyclopentadienyl)(2,7-di-t-butylfluorenyl)zirconium dichloride,
di(p-chlorophenyl)methylene(cyclopentadienyl)(3,6-di-t-butylfluorenyl)zirconium dichloride,
di(p-chlorophenyl)methylene(cyclopentadienyl)(2,7-dimet hyl-3,6-di-t-butylfluorenyl)zirconium dichloride,
di(p-chlorophenyl)methylene(cyclopentadienyl)(2,7-diphe nyl-3,6-di-t-butylfluorenyl)zirconium dichloride,
di(p-chlorophenyl)methylene(cyclopentadienyl)(octamethy loctahydrodibenzofluorenyl)zirconium dichloride,
di(p-chlorophenyl)methylene(cyclopentadienyl)(tetrameth yldodecahydrodibenzofluorenyl)zirconium dichloride,
di(p-chlorophenyl)methylene(cyclopentadienyl)(octamethy ltetrahydrodicyclopentafluorenyl)zirconium dichloride,
di(p-chlorophenyl)methylene(cyclopentadienyl)(hexamethy ldihydrodicyclopentafluorenyl)zirconium dichloride,
di(p-chlorophenyl)methylene(cyclopentadienyl)(b,h-diben zofluorenyl)zirconium dichloride,
di(m-chlorophenyl)methylene(cyclopentadienyl)(fluorenyl )zirconium dichloride,
di(m-chlorophenyl)methylene(cyclopentadienyl)(2,7-di-t-butylfluorenyl)zirconium dichloride,
di(m-chlorophenyl)methylene(cyclopentadienyl)(3,6-di-t-butylfluorenyl)zirconium dichloride,
di(m-chlorophenyl)methylene(cyclopentadienyl)(2,7-dimet hyl-3,6-di-t-butylfluorenyl)zirconium dichloride,
di(m-chlorophenyl)methylene(cyclopentadienyl)(2,7-diphe nyl-3,6-di-t-butylfluorenyl)zirconium dichloride,
di(m-chlorophenyl)methylene(cyclopentadienyl)(octamethy loctahydrodibenzofluorenyl)zirconium dichloride,
di(m-chlorophenyl)methylene(cyclopentadienyl)(tetrameth yldodecahydrodibenzofluorenyl)zirconium dichloride,
di(m-chlorophenyl)methylene(cyclopentadienyl)(octamethy ltetrahydrodicyclopentafluorenyl)zirconium dichloride,
di(m-chlorophenyl)methylene(cyclopentadienyl)(hexamethy ldihydrodicyclopentafluorenyl)zirconium dichloride,
di(m-chlorophenyl)methylene(cyclopentadienyl)(b,h-diben zofluorenyl)zirconium dichloride,
di(m-trifluoromethylphenyl)methylene(cyclopentadienyl)( fluorenyl)zirconium dichloride,
di(m-trifluoromethylphenyl)methylene(cyclopentadienyl)( 2,7-di-t-butylfluorenyl)zirconium dichloride,
di(m-trifluoromethylphenyl)methylene(cyclopentadienyl)( 3,6-di-t-butylfluorenyl)zirconium dichloride,
di(m-trifluoromethylphenyl)methylene(cyclopentadienyl)( 2,7-dimethyl-3,6-di-t-butylfluorenyl)zirconium dichloride,
di(m-trifluoromethylphenyl)methylene(cyclopentadienyl)( 2,7-diphenyl-3,6-di-t-butylfluorenyl)zirconium dichloride,
di(m-trifluoromethylphenyl)methylene(cyclopentadienyl)( octamethyloctahydrodibenzofluorenyl)zirconium dichloride,
di(m-trifluoromethylphenyl)methylene(cyclopentadienyl)( tetramethyldodecahydrodibenzofluorenyl)zirconium dichloride,
di(m-trifluoromethylphenyl)methylene(cyclopentadienyl)( octamethyltetrahydrodicyclopentafluorenyl)zirconium dichloride,
di(m-trifluoromethylphenyl)methylene(cyclopentadienyl)( hexamethyldihydrodicyclopentafluorenyl)zirconium dichloride,
di(m-trifluoromethylphenyl)methylene(cyclopentadienyl)( b,h-dibenzofluorenyl)zirconium dichloride,
di(2-naphthyl)methylene(cyclopentadienyl)(2,7-di-t-buty lfluorenyl)zirconium dichloride,

di(2-naphthyl)methylene(cyclopentadienyl)(3,6-di-t-buty lfluorenyl)zirconium dichloride,
di(2-naphthyl)methylene(cyclopentadienyl)(2,7-dimethyl-3,6-di-t-butylfluorenyl)zirconium dichloride,
di(2-naphthyl)methylene(cyclopentadienyl)(2,7-diphenyl-3,6-di-t-butylfluorenyl)zirconium dichloride,
di(2-naphthyl)methylene(cyclopentadienyl)(octamethyloct ahydrodibenzofluorenyl)zirconium dichloride,
di(2-naphthyl)methylene(cyclopentadienyl)(tetramethyldo decahydrodibenzofluorenyl)zirconium dichloride,
di(2-naphthyl)methylene(cyclopentadienyl)(octamethyltet rahydrodicyclopentafluorenyl)zirconium dichloride,
di(2-naphthyl)methylene(cyclopentadienyl)(hexamethyldih ydrodicyclopentafluorenyl)zirconium dichloride, and
di(2-naphthyl)methylene(cyclopentadienyl)(b,h-dibenzofl uorenyl)zirconium dichloride.

The following exemplary structural formulae of these metallocene compounds depict di(p-tolyl)methylene(cyclopentadienyl)(octamethyloctahydrodib enzofluorenyl)zirconium dichloride (in the following formula (A1-1)) and di(p-chlorophenyl)methylene(cyclopentadienyl)(octamethyloctah ydrodibenzofluorenyl)zirconium dichloride (in the following formula (A1-2)).

[Chem 9]

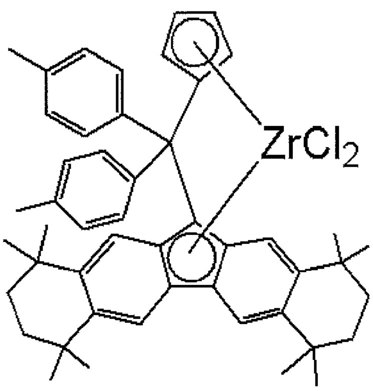
··· (A1-1)、
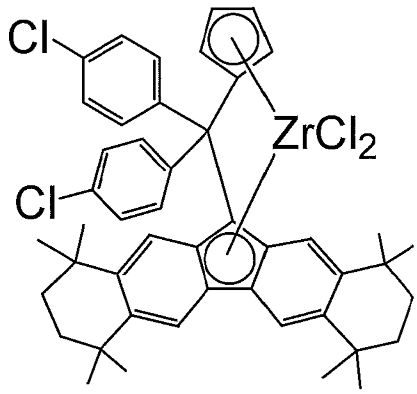
··· (A1-2)

The above compounds may be used singly or in combination of the two or more kinds.

The metallocene compound represented by the formula [A1] which can be suitably used for preparing the ethylene/propylene/non-conjugated polyene copolymer of the invention can be produced by any method without any special limitation. Specifically, it can be produced, for example, in accordance with methods described in J. Organomet. Chem., 63, 509(1996), and WO 2005/100410, WO 2006/123759, WO 01/27124, JP 2004-168744 A, JP 2004-175759 A, and JP 2000-212194 A, which are documents according to the applications by the present applicants.

(Catalyst containing metallocene compound)

Examples of polymerization catalysts which can be suitably used for producing the ethylene/propylene/non-conjugated polyene copolymer of this invention include catalysts which contain the metallocene compound represented by the aforementioned formula [A1] and are capable of copolymerizing monomers.

Preferably, they include catalysts consisting of:

(a) a metallocene compound represented by the aforementioned formula [A1];
(b) at least one compound selected from (b-1) an organometallic compound, (b-2) an organoaluminum oxycompound, and (b-3) a compound reacting with the metallocene compound (a) to form an ion pair; and as necessary,
(c) a particulate carrier.

Each of the components will be specifically explained below.

((b-1) Organometallic compound)

The organometallic compound (b-1) to be used in this invention is an organometallic compound of Groups 1, 2 and 12, 13 specifically represented by the following general formulae from [VII] to [IX].

(b-1a) Organoaluminum compound represented by a general formula of $R^a{}_mAl(OR^b)_nH_pX_q$ [VII]

(In the formula [VII], $R^a$ and $R^b$ may be the same or different from each other, and represent a hydrocarbon group having 1 to 15 carbon atoms, and preferably 1 to 4 carbon atoms, X represents a halogen atom, m is a number of $0 < m \leq 3$, n is a number of $0 \leq n < 3$, p is a number of $0 \leq p < 3$, q is a number of $0 \leq q < 3$, and $m + n + p + q = 3$.)
Such compounds can be exemplified by trialkylaluminums, such as trimethylaluminum, triethylaluminum, triisobutylaluminum, and tri-n-octylaluminum, tricycloalkylaluminums, isobutylaluminum dichloride, diethylaluminum chloride, ethylaluminum dichloride, ethylaluminum sesquichloride, methylaluminum dichloride, dimethylaluminum chloride, and diisobutylaluminum hydride.

(b-1b) Complex alkylated product of Group 1 metal and aluminum, represented by a general formula of $M^2AlR^a{}_4$ [VIII]

(In the formula [VIII], $M^2$ represents Li, Na, or K, $R^a$ is a hydrocarbon group having 1 to 15 carbon atoms, and preferably 1 to 4 carbon atoms.)
Such compounds can be exemplified by $LiAl(C_2H_5)_4$, $LiAl(C_7H_{15})_4$, and the like.

(b-1c) Dialkyl compound having Group 2 or 12 metal, represented by a general formula of $R^aR^bM^3$ [IX]

(In the formula [IX], Ra and Rb may be the same or different from each other, and represent a hydrocarbon group having 1 to 15 carbon atoms, and preferably 1 to 4 carbon atoms, and $M^3$ is Mg, Zn, or Cd.)
Among the above organometallic compounds (b-1), organoaluminum compounds, such as triethylaluminum, triisobutylaluminum, and tri-n-octylaluminum are preferable. Such organometallic compounds (b-1) can be used singly or in combination with the two or more kinds.

((b-2) Organoaluminum oxy-compound)

Organoaluminum oxycompounds (b-2) to be used in the invention may be conventionally well-known aluminoxanes, or organoaluminum oxycompounds insoluble into benzene as described in JP H2-78687 A.
Conventionally known aluminoxanes can be produced, for example, by the following methods, and usually obtained as a solution with a hydrocarbon solvent.

(1) A method in which an organoaluminum compound such as a trialkylaluminum is added to a hydrocarbon solution suspending a compound containing adsorbed water or a salt containing crystallization water, such as magnesium chloride hydrate, copper sulfate hydrate, aluminum sulfate hydrate, nickel sulfate hydrate, and cerous chloride hydrate, to make the adsorbed water or the crystallization water react with the organoaluminum compound.
(2) A method in which water, ice, or water vapor is directly applied to an organoaluminum compound such as a trialkylaluminum in a medium such as benzene, toluene, ethyl ether, and tetrahydrofuran.
(3) A method in which an organo-tin oxide such as dimethyltin oxide and dibutyltin oxide is made react with an organoaluminum compound such as a trialkylaluminum in a medium, such as decane, benzene, and toluene.

The aluminoxanes may contain a small amount of an organic metal component. Furthermore, aluminoxane in the above recovered aluminoxane solution may be separated by distillation from the solvent or the non-reacted organoaluminum compound, to be dissolved again into a solvent or suspended into a poor solvent for aluminoxane.
Specific examples of organoaluminum compounds used for preparing the aluminoxane include those which are the same as organoaluminum compounds exemplified by (b-1a).
Among them, trialkylaluminums and tricycloalkylaluminums are preferable, and trimethylaluminum and triisobutylaluminum are particularly preferable.
The organoaluminum compounds as described above can be used singly or in combination of the two or more kinds.
A benzene-insoluble organoaluminum oxycompound which is one aspect of the organoaluminum oxycompound (b-2) used in this invention is preferably a compound in which the Al component soluble into benzene at 60°C is usually 10% or less by mass in terms of Al atom with respect to 100% by mass of benzene, preferably 5% or less by mass, and especially preferably 2% or less by mass, and in other words, the organoaluminum oxycompounds are preferably insoluble or poorly soluble into benzene.
Examples of the organoaluminum oxycompound (b-2) to be used in the invention can include those which contain boron and are represented by the following general formula [X]

[Chem 10]

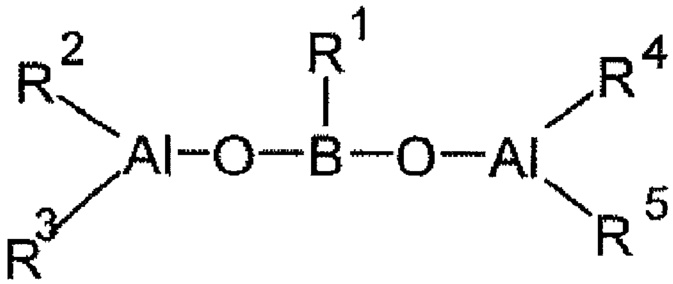

• • • [X]

[In the formula [X], $R^1$ represents a hydrocarbon group having 1 to 10 carbon atoms, and substituents from $R^2$ to $R^5$ may be the same or different from each other and represent a hydrogen atom, a halogen atom, or a hydrocarbon group having 1 to 10 carbon atoms.]

Organoaluminum oxycompounds containing boron, represented by the above general formula [X] can be produced by reacting an alkylboronic acid represented by the following general formula [XI], with an organoaluminum compound in an inert solvent under an inert gas atmosphere at a temperature within the range from-80°C to room temperature for 1 minute to 24 hours.

$R1\text{-}B(OH)_2$ [XI]

(In the formula [XI], $R^1$ represents the same group as $R^1$ in the above general formula [X].)

Specific examples of the alkylboronic acid represented by the above general formula [XI] include methylboronic acid, ethylboronic acid, isopropylboronic acid, n-propylboronic acid, n-butylboronic acid, isobutylboronic acid, n-hexyl boronic acid, cyclohexylboronic acid, phenylboronic acid, 3,5-difluorophenylboronic acid, pentafluorophenylboronic acid, and 3,5-bis(trifluoromethyl)phenylboronic acid, and the like.

Among them, methylboronic acid, n-butylboronic acid, isobutylboronic acid, 3,5-difluorophenylboronic acid, and pentafluorophenylboronic acid are preferable. These are used singly or in combination of the two or more kinds.

Specific examples of organoaluminum compounds to be reacted with these alkylboronic acids include those which are the same as an organoaluminum compound exemplified by the above compound represented by (b-1a).

Among them, trialkylaluminums and tricycloalkylaluminums are preferable, and trimethylaluminum, triethylaluminum, and triisobutylaluminum are particularly preferable. These are used singly or in combination with the two or more kinds. The above organoaluminum oxycompound (b-2) is used singly or in combination with the two or more kinds.

((b-3) Compound to be reacted with transition metal compound (A) to form an ion pair)

Examples of the compound (b-3) to be reacted with a crosslinked metallocene compound (A) used in this invention, to form an ion pair (hereinafter referred to as "ionized ionic compounds") includes Lewis acids, ionic compounds, borane compounds, and carborane compounds described in, for example, JP H1-501950 A, JP H1-502036 A, JP H3-179005 A, JP H3-179006 A, JP H3-207703 A, JP H3-207704 A, USP-5321106, and the like. Further, they can include heteropolycompounds and isopolycompounds. The ionized ionic compound (b-3) is used singly or in combination with the two or more kinds.

Specific examples of the Lewis acids includes compounds represented by BR3 (R is fluorine or a phenyl group which may have a substituent, such as fluorine, methyl, and trifluoromethyl groups), and includes, for example, trifluoroboron, triphenylboron, tris(4-fluorophenyl)boron, tris(3,5-difluorophenyl)boron, tris(4-fluoromethylphenyl)boron, tris(pentafluorophenyl)boron, tris(p-tolyl)boron, tris(o-tolyl)boron, and tris(3,5-dimethylphenyl)boron.

Examples of the ionic compound include, for example, compounds represented by following general formula [XII],

[Chem 11]

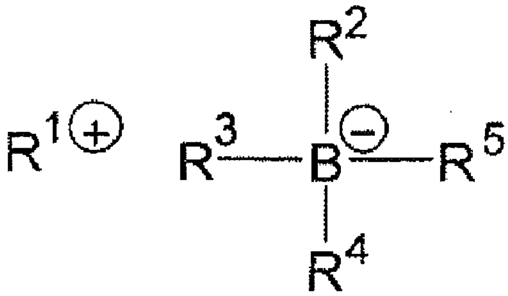

. . . [XII]

(In the formula [XII], examples of $R^{1+}$ include $H^+$, carbonium cations, oxonium cations, ammonium cations, phosphonium cations, cycloheptyltrienyl cations, and ferrocenium cations having a transition metal. Substituents from $R^2$ to $R^5$ may be the same or different from each other, and are an organic group, preferably an aryl or substituted aryl group.)

Specific examples of the carbonium cation include trisubstituted carbonium cations such as triphenyl carbonium cation, tri(methylphenyl)carbonium cation, and tri(dimethylphenyl)carbonium cation.

Specific examples of the ammonium cations include trialkylammonium cations, such as trimethylammonium cation, triethylammonium cation, tripropylammonium cation, tributylammonium cation, and tri(n-butyl)ammonium cation;

N,N-dialkylanilinium cations, such as N,N-dimethylanilinium cation, N,N-diethylanilinium cation, and N,N,2,4,6-pentamethylanilinium cation; and
dialkylammonium cations, such as di (isopropyl) ammonium cation and dicyclohexyl ammonium cation.

Specific examples of the phosphonium cation include triarylphosphonium cations, such as triphenylsulfonium cation, tri(methylphenyl)phosphonium cation, and tri(dimethylphenyl)phosphonium cation.

Examples of $R^{1+}$ are preferably carbonium cations or ammonium cations, and triphenylcarbonium cation, N,N-dimethylanilinium cation, and N,N-diethylanilinium cation are particularly preferable.

Examples of the ionic compound can also include, for example, trialkyl-substituted ammonium salts, N,N-dialkylanilinium salts, dialkylammonium salts, and triarylphosphonium salts.

Specific examples of the trialkyl-substituted ammonium salts include triethylammonium tetra(phenyl)boron, tripropylammonium tetra(phenyl)boron, tri(n-butyl)ammonium tetra(phenyl)boron, trimethylammonium tetra(p-tolyl)boron, trimethylammonium tetra(o-tolyl)boron, tri(n-butyl)ammonium tetra(pentafluorophenyl)boron, tripropylammonium tetra(o,p-dimethylphenyl)boron, tri(n-butyl)ammonium tetra(N,N-dimethylphenyl)boron, tri(n-butyl)ammonium tetra(p-trifluoromethylphenyl)boron, tri(n-butyl)ammonium tetra(3,5-ditrifluoromethylphenyl)boron, and tri(n-butyl)ammonium tetra(o-tolyl)boron.

Specific examples of the N,N-dialkylanilinium salts include N,N-dimethylanilinium tetra(phenyl)boron, N,N-diethylanilinium tetra(phenyl)boron, and N,N,2,4,6-pentamethylanilinium tetra(phenyl)boron.

Specific examples of the dialkylammonium salts include di(1-propyl)ammonium tetra(pentafluorophenyl)boron, and dicyclohexylammonium tetra(phenyl)boron.

Examples of the ionic compounds also can include triphenylcarbenium tetrakis(pentafluorophenyl)borate, N,N-dimethylanilinium tetrakis(pentafluorophenyl)borate, ferrocenium tetra(pentafluorophenyl)borate, triphenylcarbenium pentaphenylcyclopentadienyl complex, N,N-diethylanilinium pentaphenylcyclopentadienyl complex, and boron compounds represented by the following general formula [XIII] or [XIV] . In the formulae, Et represents an ethyl group.

[Chem 12]

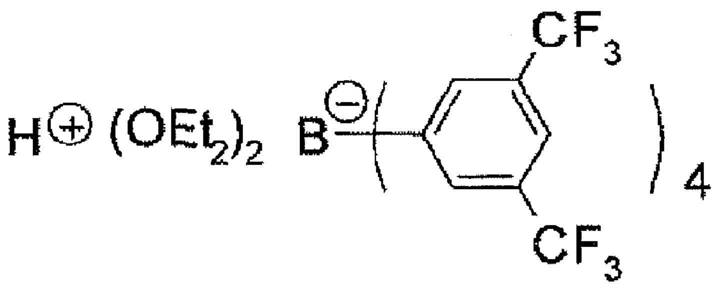

. . . [XIII]

[Chem 13]

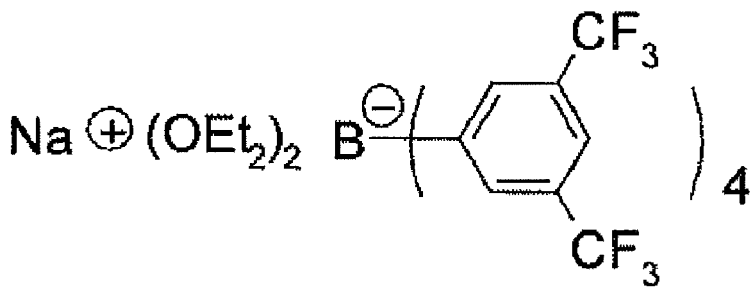

. . . [XIV]

Specific examples of the borane compounds include: decaborane; anionic salts, such as bis[tri(n-butyl)ammonium]nonaborate, bis[tri(n-butyl)ammonium]decaborate, bis[tri(n-butyl)ammonium]undecaborate, bis[tri(n-butyl)ammonium]dodecaborate, bis[tri(n-butyl)ammonium]decachlorodecaborate, and bis[tri(n-butyl)ammonium]dodecachlorododecaborate; salts of metal borane anion, such as tri(n-butyl)ammonium bis(dodecahydridedodecaborate)cobaltate (III), and bis[tri(n-butyl)ammonium]bis(dodecahydridedodecaborate)nickel ate (III).

Specific examples of the carborane compounds include anionic salts, such as 4-carbanonaborane, 1,3-dicarbanonaborane, 6,9-dicarbadecaborane, dodecahydride-1-phenyl-1,3-dicarbanonaborane, dodecahydride-1-methyl-1,3-dicarbanonaborane, undecahydride-1,3-dimethyl-1,3-dicarbanonaborane, 7,8-dicarbaundecaborane, 2,7-dicarbaundecaborane, undecahydride-7,8-dimethyl-7,8-dicarbaundecaborane, dodecahydride-11-methyl-2,7-dicarbaundecaborane, tri(n-butyl)ammonium 1-carbadecaborate, tri(n-butyl)ammonium-1-carbaundecaborate, tri(n-butyl)ammonium-1-carbadodecaborate, tri(n-butyl)ammonium-1-trimethylsilyl-1-carbadecaborate, tri(n-butyl)ammonium bromo-1-carbadodecaborate, tri(n-butyl)ammonium-6-carbadecaborate, tri(n-butyl)ammonium-7-carbaundecaborate, tri(n-butyl)ammonium-7,8-dicarbaundecaborate, tri(n-butyl)ammonium-2,9-dicarbaundecaborate, tri(n-butyl)ammonium dodecahydride-8-methyl-7,9-dicarbaundecaborate, tri(n-butyl)ammonium undecahydride-8-ethyl-7,9-dicarbaundecaborate, tri(n-butyl)ammonium undecahydride-8-butyl-7,9-dicarbaundecaborate, tri(n-butyl)ammonium undecahydride-8-allyl-7,9-dicarbaundecaborate, tri(n-butyl)ammonium undecahydride-9-trimethylsilyl-7,8-dicarbaundecaborate, and tri(n-butyl)ammonium undecahydride-4,6-dibromo-7-carbaundecaborate; and salts of metal carborane anion, such as tri(n-butyl)ammonium bis(nonahydride-1,3-dicarbanonaborate)cobaltate (III), tri(n-butyl)ammonium bis(undecahydride-7,8-dicarbaundecaborate)ferrate (III), tri(n-butyl)ammonium bis(undecahydride-7,8-dicarbaundecaborate)cobaltate (III), tri(n-butyl)ammonium bis(undecahydride-7,8-dicarbaundecaborate)nickelate (III), tri(n-butyl)ammonium bis(undecahydride-7,8-dicarbaundecaborate)cuprate (III), tri(n-butyl)ammonium bis(undecahydride-7,8-dicarbaundecaborate)aurate (III), tri(n-butyl)ammonium bis(nonahydride-7,8-dimethyl-7,8-dicarbaundecaborate)ferrate (III), tri(n-butyl)ammonium bis(nonahydride-7,8-dimethyl-7,8-dicarbaundecaborate)chromate (III), tri(n-butyl)ammonium bis(tribromooctahydride-7,8-dicarbaundecaborate)cobaltate (III), tris[tri(n-butyl)ammonium]bis(undecahydride-7-carbaundecabora te)chromate (III), bis[tri(n-butyl)ammonium]bis(undecahydride-7-carbaundecaborat e)manganate (IV), bis[tri(n-butyl)ammonium]bis(undecahydride-7-carbaundecaborat e)cobaltate (III), and bis[tri(n-butyl)ammonium]bis(undecahydride-7-carbaundecaborat e)nickelate (IV).

The heteropolycompounds consist of an atom selected from silicon, phosphorus, titanium, germanium, arsenic, and tin, and one or more kinds of atoms selected from vanadium, niobium, molybdenum, and tungsten. Specifically, those which can be used include, but are not limited to, phosphovanadic acid, germanovanadic acid, arsenovanadic

acid, phosphoniobic acid, germanoniobic acid, siliconomolybdic acid, phosphomolybdic acid, titanomolibdic acid, germanomolybdic acid arsenomolybic acid, tin molybdic acid, phosphotungstic acid, germanotungstic acid, tin tungstic acid, phosphomolybdovanadic acid, phosphotungstovanadic acid, germanotungstovanadic acid, phosphomolybdotungsto vanadic acid, germanomolybdotungstovanadic acid, phosphomolybdotungstic acid, phosphomolybdoniobic acid, and salts of these acids, for example, salts with Group 1 or Group 2 metals, specifically, with lithium, sodium, potassium, rubidium, cesium, beryllium, magnesium, calcium, strontium, and barium, and organic salts such as triphenylethyl salt.

Among the ionized ionic compounds (b-3), the above ionic compounds are preferable, and especially triphenylcarbenium tetrakis(pentafluorophenyl)borate and N,N-dimethylanilinium tetrakis(pentafluorophenyl)borate are more preferable. The ionized ionic compounds (b-3) are used singly or in combination of the two or more kinds.

In the invention, when a metallocene catalyst containing the metallocene compound (a) represented by the above general formula [A1], an organometallic compound (b-1) such as triisobutylaluminum, an organoaluminum oxycompound (b-2) such as methylaluminoxane, and an ionized ionic compound (b-3) such as triphenylcarbenium tetrakis (pentafluorophenyl) borate is used as a catalyst, it can exhibit very high polymerization activity in the production of the ethylene/propylene/non-conjugated polyene copolymer.

The metallocene catalyst used for this invention can utilize the above metallocene compound (a) and at least one kind of compound (b) selected from the organometallic compound (b-1), the organoaluminum oxycompound (b-2), and the ionized ionic compound (b-3), and as necessary, it can also utilize a carrier (c).

((C) Carrier)

The carrier (c) used as necessary in this invention (microparticulate carrier) is an inorganic or organic compound, which is a granular or microparticulate solid.

Examples of the inorganic compound are preferably porous oxides, inorganic halides, clays, clay minerals, or ion-exchangeable layered compounds.

Specific examples of the porous oxides which can be used include $SiO_2$, $Al_2O_3$, MgO, ZrO, $TiO_2$, $B_2O_3$, CaO, ZnO, BaO, and $ThO_2$, or composites or mixtures containing any of them, for example, natural or synthesized zeolite, $SiO_2$-MgO, $SiO_2$-Al2$O_3$, $SiO_2$-$TiO_2$, $SiO_2$-$V_2O_5$, $SiO_2$-$Cr_2O_3$, and $SiO_2$-$TiO_2$-MgO. Among them, those mainly composed of $SiO_2$ and/or $Al_2O_3$ are preferable. Although these porous oxides are different in nature depending on their kinds and production methods, the carrier preferably used in this invention desirably has a particle diameter within a range from 10 to 300 $\mu$m, preferably from 20 to 200 $\mu$m, a specific surface area within a range from 50 to 1,000 $m^2$/g, preferably 100 to 700 $m^2$/g, and a pore volume within a range from 0.3 to 3.0 $cm^3$/g. Such a carrier is used, as necessary, after calcination at a temperature with in a range from 100 to 1, 000°C, preferably from 150 to 700°C.

Examples of the inorganic halides to be used are $MgCl_2$, $MgBr_2$, $MnCl_2$, and $MnBr_2$. The inorganic halides may be used as-is, or after trituration by ball milling or vibration milling. Alternatively, they can also be used in a microparticulate form which is obtained by precipitating, using a precipitating agent, inorganic halide dissolved into a solvent such as alcohol.

The clays to be used in this invention are usually composed mainly of clay minerals. The ion-exchangeable layered compounds to be used in this invention are compounds which have a structure in which planes formed by, for example, ionic bonds are piled in parallel on each other by a weak bonding force, and are compounds containing exchangeable ions. Most clay minerals are ion-exchangeable layered compounds. These clays, clay minerals, and ion-exchangeable layered compounds are not limited to natural materials, and synthesized ones can also be used.

The clays, clay minerals, and ion-exchangeable layered compounds can be exemplified by clays, clay minerals, or ionic crystal compounds having a layered crystalline structure, such as the hexagonal close-packed structure, the antimony structure, the $CdCl_2$ structure, and the $CdI_2$ structure. Examples of the clays and clay minerals include kaolin, bentonite, kibushi clay, gairome clay, allophane, hisingerite, pyrophyllite, mica group, montmorilonite group, vermiculite, chlorite group, palygorskite, kaolinite, nakhlite, dickite, and halloysite, and examples of the ion-exchangeable layered compound include crystalline acidic salts of multivalent metal, such as $\alpha$-Zr $(HAsO_4)_2 \cdot H_2O$, $\alpha$-Zr $(HPO_4)_2$, $\alpha$-$Zr(KPO_4)_2 \cdot 3H_2O$, $\alpha$-$Ti(HPO_4)_2$, $\alpha$-$Ti(HAsO_4)_2 \cdot H_2O$, $\alpha$-$Sn(HPO_4)_2 \cdot$H2O, $\gamma$-$Zr(HPO_4)_2$, $\gamma$-$Ti(HPO_4)_2$, and $\gamma$-$Ti(NH_4PO_4)_2 \cdot H_2O$.

Such clays and clay minerals, or ion-exchangeable layered compounds have a pore volume preferably of 0.1 cc/g or more, and particularly preferably of from 0.3 to 5 cc/g, as measured for pores of 20 Å or more in radius by using a mercury intrusion method. The pore volume is measured for pores of 20 to 30, 000 Å in a radius by a mercury intrusion method using a mercury porosimeter.

When a carrier is used which has a pore volume of less than 0.1 cc/g as measured for pores of 20 Å or more in radius, it tends to be difficult to yield high polymerization activity.

Clay and clay mineral used in this invention are also preferably chemically treated. Any chemical treatment can be used such as a treatment for removing impurity attached to the surface of the materials and a treatment affecting the crystalline structure of the clay. Specific examples of the chemical treatment include acid treatments, basic treatments,

treatments with salts, and treatments with organics. The acid treatments not only remove impurities on the surface of the materials, but also increase their surface area by eluting cations, such as Al, Fe, and Mg. The basic treatments destroy the crystalline structure of the clay, resulting in a change in its structure. The treatments with salts or organics can create ionic complexes, molecular composites, and organic derivatives, to change the surface area or the interlayer distance of the materials.

Ion-exchangeable layered compounds to be used in this invention may be those having an increased interlayer distance owing to the replacement of exchangeable ions between the layers with other bulkier ions by using their ion-exchangeability. Such bulky ions play a role of poles supporting the layered structure and are usually called "pillars." Inserting another substance between the layers of a layered compound is called "intercalation." Examples of the intercalated guest compound include cationic inorganic compounds such as $TiCl_4$ and $ZrCl_4$, metal alkoxides, such as $Ti(OR)_4$, $Zr(OR)_4$, $PO(OR)_3$, and $B(OR)_3$ (R is, for example, a hydrocarbon group), metal hydroxide ions, such as $[Al_{13}O_4(OH)_{24}]^{7+}$, $[Zr_4(OH)_{14}]^{2+}$, and $[Fe_3O(OCOCH_3)_6]^{+}$. These compounds are used singly or in combination of the two or more kinds. These compounds can be intercalated in the presence of polymers obtained through hydrolysis of metal alkoxides, such as $Si(OR)_4$, $Al(OR)_3$, and $Ge(OR)_4$ (R is, for example, a hydrocarbon group), and colloidal inorganic compounds such as $SiO_2$. Examples of the pillars include an oxide produced by thermal dehydration of the above intercalated metal hydroxide ion.

The clay, clay mineral, and ion-exchangeable layered compound to be used in this invention can be used as-is or after treated by, for example, ball milling or sieving. They can also be used after fresh adsorption of water or thermal dehydration. Further, they can be used singly or in combination of the two or more kinds.

Among them, preferable are clays or clay minerals, and particularly preferable are montmorilonite, vermiculite, hectorite, taeniolite, and synthesized mica.

Examples of the organic compound include granular or microparticulate solids ranging from 10 to 300 $\mu$m in particle diameter. Specifically, they can be exemplified by polymers or copolymers mainly composed of an $\alpha$-olefin having 2 to 14 carbon atoms, such as ethylene, propylene, 1-butene, and 4-methyl-1-pentene, polymers or copolymers mainly composed of vinylcyclohexane or styrene, and modified products thereof.

The metallocene catalyst to be used in this invention contains not only the metallocene compound (a), at least one kind of compound (b) selected from the organometallic compound (b-1), the organoaluminum oxycompound (b-2), the ionized ionic compound (b-3), and the carrier (c) used as necessary, but also the following specific organic compound component (d), as necessary.

((d) Organic compound component)

In this invention, the organic compound component (d) is used, as necessary, in order to improve polymerization performance and the physical properties of the produced polymer. Examples of such organic compound include, but are not limited to, alcohols, phenol compounds, carboxylic acids, phosphorus compounds, and sulfonate salts.

(Method for producing ethylene/propylene/non-conjugated polyene copolymer)

The ethylene/propylene/non-conjugated polyene copolymer according to this invention can be produced by copolymerizing monomers consisting of ethylene, propylene, and a non-conjugated polyene.

When such monomers are copolymerized, methods of how to use respective components composing the above polymerization catalyst and the order of adding the components are arbitrarily selected, and some exemplary methods are given below:

(1) A method in which the metallocene compound (a) alone is added to a polymerizer.
(2) A method in which the metallocene compound (a) and the compound (b) are added to the polymerizer in an arbitrary order.
(3) A method in which a catalyst component including the carrier (c) and the metallocene compound (a) supported on the carrier, and the compound (b) are added to the polymerizer in an arbitrary order.
(4) A method in which a catalyst component including the carrier (c) and the compound (b) supported on the carrier, and the metallocene compound (a) are added to the polymerizer in an arbitrary order.
(5) A method in which a catalyst component including the carrier (c) and metallocene compound (a) and the compound (b) both supported on the carrier is added to the polymerizer.

In each of the above methods (2) to (5), at least two of the metallocene compound (a), the compound (b), and the carrier (c) may be contacted with each other in advance.

In each of the above methods (4) and (5) in which the compound (b) is supported on the carrier, an additional unsupported compound (b) may be added in an arbitrary order as necessary. In this case, the additional compound (b)

may be the same as or different from the compound (b) supported on the carrier (c).

The solid catalyst component including the above carrier (c) and the metallocene compound (a) supported on the carrier and the solid catalyst component including the carrier (c) and the metallocene compound (a) and the compound (b) both supported on the carrier may be prepolymerized with olefin, and an additional catalyst component may be supported on the prepolymerized solid catalyst component.

In the invention, the ethylene/propylene/non-conjugated polyene copolymer can be suitably obtained by copolymerizing monomers in the presence of the metallocene catalyst as described above.

When the olefin is polymerized by using the metallocene catalyst as described above, the metallocene compound (a) is used usually in an amount with in a range from $10^{-12}$ to $10^{-2}$ mol, preferably from $10^{-10}$ to $10^{-8}$ mol per one liter of the reaction volume.

The compound (b-1) is used in an amount such that the molar ratio of the compound (b-1) to all atoms of the transition metal (M) in the metallocene compound (a), represented by [(b-1)/M], is usually within a range from 0.01 to 50,000, preferably from 0.05 to 10,000.

The compound (b-2) is used in an amount such that the molar ratio of aluminum atoms of the compound (b-2) to all atoms of the transition metal (M) in the metallocene compound (a), represented by [(b-2)/M], is usually within a range from 10 to 50,000, preferably from 20 to 10,000.

The compound (b-3) is used in an amount such that the molar ratio of the compound (b-3) to atoms of the transition metal (M) in the metallocene compound (a), represented by [(b-3)/M], is usually within a range from 1 to 20, preferably 1 from 15.

In this invention, the ethylene/propylene/non-conjugated polyene copolymer can be produced in either liquid phase polymerization methods such as solution (dissolution) polymerization, suspension polymerization, or vapor phase polymerization methods, and the methods preferably include, but are not especially limited to, the following steps of obtaining a polymerization-reaction solution.

The step of obtaining a polymerization-reaction solution is a step to obtain a polymerization-reaction solution of the ethylene/propylene/non-conjugated polyene copolymer by polymerizing monomers consisting of ethylene, propylene, and a non-conjugated polyene by using an aliphatic hydrocarbon as a polymerization solvent, in the presence of a metallocene catalyst according to this invention, the metallocene catalyst containing a transition metal compound wherein $R^{13}$ and $R^{14}$ bonding to $Y^1$ in the aforementioned general formula [A1] are preferably a phenyl group, or a phenyl group substituted by an alkyl or halogen group, and $R^7$ and $R^{10}$ preferably contain an alkyl substituent.

When the concentration of the ethylene/propylene/non-conjugated polyene copolymer in the polymerization solvent exceeds the above range, the viscosity of the polymerization solution too high to be stirred uniformly may cause a difficulty in the polymerization reaction.

Examples of the polymerization solvent include aliphatic hydrocarbons and aromatic hydrocarbons. Specific examples thereof include aliphatic hydrocarbons, such as propane, butane, pentane, hexane, heptane, octane, decane, dodecane, and kerosene, alicyclic hydrocarbons, such as cyclopentane, cyclohexane, and methyl cyclopentane, aromatic hydrocarbons, such as benzene, toluene, and xylene, halogenated hydrocarbons, such as ethylene chloride, chlorobenzene, and dicloromethane, and they can be used singly or in combination of the two or more kinds. Olefins themselves can also be used as a solvent. Among them, hexane is preferable from the view point of the separation and purification of the obtained ethylene/propylene/non-conjugated polyene copolymer.

Polymerization temperature is usually within a range from-50 to +200°C, preferably from 0 to +200°C, more preferably from +80 to +200°C, and a higher temperature (+80°C or more) is preferable from the viewpoint of catalyst activity, copolymerization ability, and productivity, although depending on a molecular weight to be achieved and the polymerization activity of a metallocene catalyst system to be used.

Polymerization pressure is generally within a range from atmospheric pressure to 10 MPa gauge pressure, preferably from atmospheric pressure to 5 MPa gauge pressure, and polymerization reaction can be carried out by any one of batchwise, semi-continuous, and continuous methods. The polymerization can also be carried out in two or more steps under different reaction conditions. In this invention, it is preferable to adopt, among them, a method of carrying out copolymerization by feeding monomers continuously into a reactor.

Reaction time (average residence time in the case that copolymerization is carried out continuously) varies depending on conditions such as catalyst concentration and polymerization temperature, but it is usually within a range from 0.5 minutes to 5 hours, preferably 5 minutes to 3 hours.

The molecular weight of the obtained ethylene/propylene/non-conjugated polyene copolymer can also be controlled by adding hydrogen in the polymerization system or by changing the polymerization temperature. It can also be controlled by the amount of the compound (b) to be used. Specific examples of the compound include triisobutylaluminum, methylaluminoxane, and diethyl zinc. When hydrogen is added, its amount is suitably with in a range from about 0.001 to about 100 NL per 1 kg of olefin.

The charged molar ratio of ethylene to the above propylene, (ethylene/propylene), is preferably with in a range from 40/60 to 99.9/0.1, more preferably from 40/60 to 85/15, still more preferably from 55/45 to 85/15, and most preferably

from 55/45 to 78/22.

The charged amount of the non-conjugated polyene is usually within a range from 0.07 to 10% by mass, preferably from 0.1% by mass to 8.0% by mass, more preferably from 0.5% by mass to 5.0% by mass, with respect to 100% by mass of the sum of ethylene, α-olefin, and non-conjugated polyene (total amount of the total charged monomers in a case in which different monomers are used) .

(Ethylene/carboxylic acid copolymer)

The ethylene/carboxylic acid copolymer is not particularly limited as long as it has an ethylene-derived structural unit and a carboxylic acid-derived structural unit. The ethylene/carboxylic acid copolymer is preferably an ethylene/unsaturated carboxylic acid copolymer. Note that according to this invention, the ethylene/carboxylic acid copolymer include ethylene/carboxylic anhydride copolymer. In this case, the ethylene/carboxylic acid copolymer is not particularly limited as long as it has an ethylene-derived structural unit and a carboxylic anhydride-derived structural unit.

The melt flow rate (MFR) (190°C, a load of 2160g, JIS K7210(1999)) of the ethylene/carboxylic acid copolymer is not particularly limited. However, it is preferably from 0.01 g/10 minutes to 150 g/10 minutes, more preferably from 0.1 g/10 minutes to 100 g/10 minutes, and particularly preferably from 0.5 to 50 g/10 minutes.

The ethylene/unsaturated carboxylic acid copolymer is a copolymer in which at least ethylene and unsaturated carboxylic acid are copolymerized. In other words, the ethylene/unsaturated carboxylic acid copolymer is a copolymer having a structural unit derived from ethylene and a structural unit derived from unsaturated carboxylic acid. Monomers other than ethylene and unsaturated carboxylic acid may be used for the ethylene/unsaturated carboxylic acid copolymer. In other words, the ethylene/unsaturated carboxylic acid copolymer may have structural units derived from monomers other than ethylene and unsaturated carboxylic acid.

The ethylene/unsaturated carboxylic acid copolymer is preferably at least one member selected from the group consisting of ethylene/unsaturated carboxylic acid binary copolymers and ethylene/unsaturated carboxylic acid/unsaturated carboxylic acid ester ternary copolymers.

The content of a structural unit derived from ethylene in the ethylene/unsaturated carboxylic acid copolymer is preferably from 60% by mass to 98% by mass, more preferably from 70% by mass to 98% by mass, and particularly preferably from 75% by mass to 97% by mass with respect to the total amount of the ethylene/unsaturated carboxylic acid copolymer.

An example of unsaturated carboxylic acid is an α, β-unsaturated carboxylic acid. Specific examples thereof include unsaturated carboxylic acids or half esters having 4 to 8 carbon atoms such as acrylic acid, methacrylic acid, ethacrylic acid, itaconic acid, fumaric acid, crotonic acid, maleic acid, and maleic acid monoesters (e.g., maleic acid monomethyl and maleic acid monoethyl). Preferable examples of unsaturated carboxylic acid include acrylic acid and methacrylic acid. In addition, unsaturated carboxylic acid may be unsaturated carboxylic acid anhydride. Examples of unsaturated carboxylic acid anhydride include maleic anhydride, phthalic anhydride, and acetic anhydride. Of these, maleic anhydride is preferable.

The content of a structural unit derived from unsaturated carboxylic acid in the ethylene/unsaturated carboxylic acid copolymer is preferably from 2% by mass to 25% by mass and more preferably from 2% by mass to 20% by mass with respect to the total amount of the ethylene/unsaturated carboxylic acid copolymer.

Examples of unsaturated carboxylic acid ester include α,β-unsaturated carboxylic acid esters, which are preferably α, β-unsaturated carboxylic acid alkylesters having an alkyl moiety with 1 to 8 carbon atoms, and more preferably acrylic acid methyl, acrylic acid ethyl, acrylic acid isobutyl, acrylic acid n-butyl, methacrylic acid ethyl, ethyl methacrylate, isobutyl methacrylate, and n-butyl methacrylate.

In a case in which the ethylene/unsaturated carboxylic acid copolymer contains a structural unit derived from unsaturated carboxylic acid ester, the content of unsaturated carboxylic acid ester is preferably from more than 0% by mass to 25% by mass, more preferably from 2% by mass to 25% by mass, and particularly preferably from 2% by mass to 20% by mass with respect to the total amount of the ethylene/unsaturated carboxylic acid copolymer.

Examples of different monomers (monomers other than ethylene, unsaturated carboxylic acid, and unsaturated carboxylic acid ester) which can be copolymerized to form an ethylene/unsaturated carboxylic acid copolymer include carbon monoxide, glycidyl acrylate, and glycidyl methacrylate.

In a case in which the ethylene/unsaturated carboxylic acid copolymer contains structural units derived from the above-described different monomers, the content of structural units derived from the different monomers is preferably 20% by mass or less, more preferably 10% by mass or less, and still more preferably 5% by mass or less with respect to the total amount of the ethylene/unsaturated carboxylic acid copolymer.

Specific examples of an ethylene/carboxylic acid copolymer used in this invention include an ethylene/methacrylic acid copolymer, an ethylene/acrylic acid copolymer, and an ethylene/maleic anhydride copolymer.

Products including commercially available products can be used as the ethylene/unsaturated carboxylic acid copolymer without particular limitations. A method of producing thereof may also be any method such as a known method

without particular limitation.

(Acrylic-type rubber)

According to this invention, an acrylic-type rubber is a rubber or a composite rubber formed with a polymer containing a structural unit derived from a (metha)acrylic-type monomer. An acrylic-type rubber is a polymer containing a structural unit derived from a (metha)acrylic-type monomer at from 50% to 100% by mass and also containing a structural unit derived from a different monomer within a range of 0% to 50% by mass.

According to this invention, the term " (metha) acrylic-type monomer" is used to mean a methacrylic monomer or an acrylic-type monomer. The term "methacrylic monomer" used herein refers to a monomer having one $CH_2=CH(CH_3)$-COO- structure in its molecule and the term "acrylic-type monomer" refers to a monomer having one $CH_2=CH_2$-COO- structure in its molecule.

The term "composite rubber" refers to a rubber obtained via stepwise polymerization rather than simple polymerization in a case in which a polymer containing a structural unit derived from the above-described (metha)acrylic-type monomer is polymerized using two or more kinds of monomers.

A usual (metha)acrylic-type monomer to be used is, but is not particularly limited to, (metha) acrylate. Specific examples thereof include methylacrylate, ethylacrylate, n-propylacrylate, n-butyl acrylate, 2-ethylhexyl acrylate, octyl acrylate, tridecyl acrylate, ethoxyethoxyethylacrylate, methoxytripropylene glycol acrylate, 4-hydroxybutyl acrylate, lauryl acrylate, lauryl methacrylate, tridecyl methacrylate, and stearyl methacrylate. These monomers may be used singly or in combination of the two or more kinds.

Among these monomers, in terms of rubber elasticity, modulus, mechanical strength, and oil resistance, n-butyl acrylate, 2-ethylhexyl acrylate, octyl acrylate, lauryl acrylate, tridecyl acrylate, lauryl methacrylate, and tridecyl methacrylate are preferable.

As described above, an acrylic-type rubber may contain a structural unit derived from a monomer other than a (metha)acrylic-type monomer. Examples of different monomers that can be used include: α-olefins such as ethylene, propylene, and 1-butene; diene-based monomers such as 1,3-butadiene, isoprene, and chloroprene; aromatic vinyls such as styrene and α-methylstyrene; unsaturated nitriles such as acrylonitrile and methacrylonitrile; vinyl ethers such as methylvinyl ether and butyl vinyl ether; halogenated vinyls such as vinyl chloride and vinyl bromide; halogenated vinylidenes such as vinylidene chloride and vinylidene bromide; vinyl-based monomers having a glycidyl group such as glycidyl acrylate, glycidyl methacrylate, allyl glycidyl ether, and ethylene glycol glycidyl ether; polyfunctional monomers such as divinylbenzene, ethylene glycol dimethacrylate, and 1, 3-butylene glycol dimethacrylate. In addition, these different monomers may be used singly or in combination of the two or more kinds.

When an acrylic-type rubber is produced, a crosslinking agent may be used. As a crosslinking agent, a monomer containing two or more unsaturated bonds in its molecule is usually used. In a case in which a monomer containing two or more unsaturated bonds in its molecule is used, assuming that the mass of a monomer to be used is 100% by mass, the monomer is used at preferably from 0.01% to 2% by mass and more preferably from 0.05% to 1.5% by mass.

Examples of crosslinking agents include, for example, ethylene glycol dimethacrylate, propyleneglycol dimethacrylate, 1,3-butylene glycol dimethacrylate, 1,4-butylene glycol dimethacrylate, divinylbenzene, and polyfunctional methacyrl group-denatured silicone. Such crosslinking agents may be used singly or in combination of the two or more kinds.

As an acrylic-type rubber, any product such as a commercially available product can be used without particular limitations. A method of producing an acrylic-type rubber is not particularly limited. However, an acrylic-type rubber can be produced by, for example, a method of emulsion polymerization, suspension polymerization, or the like using, as an emulsifier or dispersion stabilizer, a variety of surfactants such as anionic surfactants, nonionic surfactants, and cationic surfactants.

(Halogen-containing polymer)

The term "halogen-containing polymer" refers to a polymer having halogen atom(s) in its molecule, which is preferably a polymer containing a structural unit derived from a halogen-containing monomer.

Examples of halogen atoms include a fluorine atom, a chlorine atom, bromine atom, and an iodine atom. However, as a halogen-containing polymer, a polymer containing a fluorine atom which is a fluorine atom-containing polymer is preferable.

A halogen-containing polymer is preferably a rubber and more preferably a rubber of a fluorine atom-containing polymer which is a fluorine rubber.

Examples of a fluorine rubber include, for example: VdF/perhal-olefin-based elastomers such as vinylidene fluoride (VdF)/hexafluoropropylene(HFP) copolymer, VdF/tetrafluoroethylene (TFE)/HFPcopolymer, VdF/TFE/perfluoro (alkylvinyl ether) (PAVE) copolymer, VdF/chlorotrifluoroethylene (CTFE) copolymer; VdF/non-perhalo-olefin-based elastomers such as a TFE/propylene/VdF copolymer and a HFP/ethylene /VdF copolymer; perfluoro elastomers such as a TFE/PAVE copolymer; non-perfluoro elastomers such as a TFE/propylene copolymer and a HFP/ethylene copolymer; and fluorosilicone rubbers.

The above-described fluoro(alkylvinyl ether) may contain a plurality of ether bonds. Further, the molecular weight of fluorine rubber is from 20,000 to 300,000 and preferably from 50,000 to 200,000 in terms of the number average molecular weight.

Among them, in terms of thermal resistance, oil resistance, and chemical resistance, elastomers of a VdF/HFP copolymer, a VdF/TFE/HFP copolymer, a VdF/TFE/PAVE copolymer, a TFE/propylene/VdF copolymer, a HFP/ethylene /VdF copolymer, a TFE/propylene copolymer, and a HFP/ethylene copolymer are preferable, and elastomers of a VdF/HFP copolymer and a VdF/TFE/HFP copolymer are particularly preferable.

In a fluorine rubber, as a structural unit containing a crosslinkable group, a polyfunctional monomer containing a plurality of vinyl groups or allyl groups or an iodine or bromine-containing monomer may be copolymerized. In addition, it is also possible to cause double bonds, which may serve as crosslinkable sites, to be generated in a molecule of such rubber by promoting dehydrofluorination with heat treatment or the like. A fluorine rubber, in which olefin iodide or olefin bromide is used as a crosslinkable unit, and which contains a structural unit derived from olefin iodide or a structural unit derived from olefin bromide, is particularly preferable.

In addition, the content of crosslinkable sites (for example, the content of a structural unit derived from olefin bromide when olefin bromide is used as a crosslinkable unit) in a fluorine rubber is preferably from 0.05 to 5 mol%, more preferably from 0.15 to 3 mol%, and particularly preferably from 0.25 to 2 mol%. When there are fewer crosslinkable sites than the above, sealing performance or bonding strength becomes insufficient. When there are more crosslinkable sites than the above, elongation or flexibility is reduced, which results in loss of rubber elasticity.

Next, the above-described layers (1) to (4) will be described.

(Layer (1))

The layer (1) is a layer prepared using an ethylene/propylene/non-conjugated polyene copolymer.

It is possible to prepare the layer (1) using at least an ethylene/propylene/non-conjugated polyene copolymer. In general, it is a layer prepared using not only an ethylene/propylene/non-conjugated polyene copolymer but also other components as starting materials. The layer (1) is a layer prepared by crosslinking using an ethylene/propylene/non-conjugated polyene copolymer. Examples of components other than the ethylene/propylene/non-conjugated polyene copolymer include: (B) an organic peroxide; (C) carbon black; (D) an antioxidant; (E) a softening agent; (F) a metal oxide; (G) a crosslinking aid; (H) an onium salt; (I) an inorganic compound containing oxygen and at least one element selected from Group 2 elements and Group 13 elements; and (J) other components.

((B) Organic peroxide)

Any organic peroxide that can act as a crosslinking agent for the ethylene/propoylene/non-conjugated polyene copolymer can be suitably used as the organic peroxide (B).

Specific examples of the organic peroxide (B) include dicumyl peroxide, di-tert-butyl peroxide, 2,5-di-(tert-butylperoxy)hexane, 2,5-dimethyl-2,5-di-(tert-butylperoxy)hexane, 2,5-dimethyl-2,5-di-(tert-butylperoxy)hexyne-3, 1,3-bis(tert-butylperoxyisopropyl)benzene, 1,1-bis(tert-butylperoxy)-3,3,5-trimethylcyclohexane, n-butyl-4,4-bis(tert-butylperoxy)valerate, benzoyl peroxide, p-chlorobenzoyl peroxide, 2,4-dichlorobenzoyl peroxide, tert-butylperoxybenzoate, tert-butylperoxyisopropylcarbonate, diacetyl peroxide, lauroyl peroxide, and tert-butylcumyl peroxide.

The organic peroxide (B) can be used singly or in combination of two or more kinds.

The organic peroxide (B) is used preferably in an amount with in a range of 0.1 to 5 parts by mass, preferably 0.5 to 5 parts by mass, and more preferably 0.5 to 4 parts by mass, with respect to 100 parts by mass of the ethylene/propylene/non-conjugated polyene copolymer. The compounded amount of the organic peroxide (B) within the above range is suitable because crosslinked shaped articles have no bloom on the surface thereof and the rubber shaped articles exhibit excellent crosslinking characteristics.

((C) Carbon black)

Examples of the carbon black (C) include various carbon blacks such as SRF, GPF, FEF, MAF, HAF, ISAF, SAF, FT, and MT, and surface treated carbon blacks which are these carbon blacks surface-treated with an agent such as a silane coupling agent.

The compounded amount of the carbon black (C) may be 10 to 300 parts by mass, preferably 10 to 200 parts by mass, more preferably 10 to 100 parts by mass, with respect to 100 parts by mass of the ethylene/propylene/non-conjugated polyene copolymer.

When the content of carbon black (C) is within the above range, it is preferable because it can provide a layered product having improved mechanical properties such as tensile strength and abrasion resistance and increase the hardness thereof without impairing other physical properties thereof.

((D) Antioxidant)

When an antioxidant (D) is contained, it can prolong the life-time of shaped article. Antioxidants (D) which may be used are conventionally well-known antioxidants, for example, amine-based antioxidants, phenol-based antioxidants, and sulfur-based antioxidants.

Specific examples of the antioxidant (D) include aromatic-secondary-amine-based antioxidants such as phenylbutylamine and N,N-di-2-naphthyl-p-phenylenediamine, and 4,4'-bis ($\alpha$, $\alpha$-dimethylbenzyl)diphenylamine (also known as "4,4'-dicumyl-diphenylamine"), amine-based antioxidants such as 2,2,4-trimethyl-1,2-dihydroquinoline polymer, phenol-based antioxidants such as dibutylhydroxytoluene and tetrakis[methylene(3,5-di-t-butyl-4-hydroxy)hydrocinnamate]me thane; thioether antioxidants such as bis[2-methyl-4-(3-n-alkylthiopropionyloxy)-5-t-butylphenyl]su lfide; dithiocarbamate-based antioxidants such as nickel dibutyldithiocarbamate; zinc salts of 2-mercaptobenzoylimidazole and 2-mercaptobenzoimidazole; and sulfur-based antioxidants such as dilaurylthiodipropionate and distearylthiodipropionate.

These antioxidants (D) can be used singly or in combination of two or more kinds.

The compounded amount of the antioxidants (D) is within a range of 0.5 to 5.0 parts by mass, and preferably 0.5 to 4.5 parts by mass, more preferably 0.5 to 4.0 parts by mass, with respect to 100 parts by mass of the ethylene/propylene/non-conjugated polyene copolymer. When the compounded amount is within the above range, it is preferable because the layered product has excellent heat aging resistance.

((E) Softening agent)

Agents known as components conventionally compounded in rubbers, such as softening agents and processing aids, can be widely used as the softening agent (E).

Specific examples of the agent include:

petroleum-based softening agents such as paraffin-based processed oils, naphthene-based processed oils, and aromatic processed oils;
softening materials based on synthesized oils;
cooligomer of ethylene and $\alpha$-olefin;
paraffin wax;
liquid paraffin;
white oil;
petrolatum;
softening agents based on coal tar such as coal tar and coal tar pitch;
softening agents based on vegetable oils, such as castor oil, cotton oil, linseed oil, canola oil, coconut oil, palm oil, soya oil, groundnut oil, Japan wax, rosin, pine oil, dipentene, pine tar, and tall oil;
substitutes (factices), such as black substitute, white substitute, and candy substitute;
waxes, such as beeswax, carnauba wax, and lanolin;
fatty acids, fatty acid salts and esters, such as ricinoleic acid, palmitic acid, stearic acid, linoleic acid, lauric acid, myristic acid, barium stearate, calcium stearate, magnesium stearate, zinc stearate, and zinc laurate;
ester-based plasticizers, such as dioctyl phthalate, dioctyl adipate, and dioctyl sebacate;
coumarone-indene resin;
phenol-formaldehyde resin;
terpene-phenol resin;
polyterpene resin;
petroleum-based hydrocarbon resins, such as synthesized polyterpene resins, aromatic hydrocarbon resins, aliphatic hydrocarbon resins, aliphatic ring hydrocarbon resins, aliphatic/alicyclic petroleum resins, aliphatic/aromatic petroleum resins, hydrogenated modified alicyclic hydrocarbon resins, hydrogenated hydrocarbon resins, liquid polybutene, liquid polybutadiene, and atactic polypropylene.

Among them, fatty acid, petroleum-based softening agents, phenol-formaldehyde resin, petroleum-based hydrocarbon resins are preferable, fatty acid, petroleum-based softening agents, and petroleum-based hydrocarbon resins are more preferable, and fatty acid and petroleum-based softening agents are particularly preferable.

Among the petroleum-based softening agents, preferable are petroleum-based processed oils, among which

paraffin-based processed oils, naphthene-based processed oils, aromatic processed oils are more preferable, and paraffin-based processed oils are particularly preferable. Among the petroleum-based hydrocarbon resins, aliphatic ring hydrocarbon resins are preferable. Among these softening agents, paraffin-based processed oils are particularly preferable.

These softening agents can be used singly or in combination of the two or more kinds.

The compounded amount of the softening agent (E) is not particularly limited, but it is usually less than 200 parts by mass, and is preferably from 0 to 100 parts by mass, more preferably from 0 to 80 parts by mass, still more preferably from 0 to 70 parts by mass, and particularly preferably from 0 to 60 parts by mass with respect to 100 parts by mass of the ethylene/propylene/non-conjugated polyene copolymer.

(F) Metal oxide

Metal oxides can be appropriately selected depending on applications of the layered product and can be used singly or in combination of two or more kinds. Specific examples of metal oxides include zinc flower (for example, META-Z102) (trade name: zinc oxide manufactured by Inoue Calcium Corporation or the like) and magnesium oxide. The compounded amount thereof is usually from 0.5 to 20 parts by mass, preferably from 0.5 to 15 parts by mass, more preferably from 0.5 to 10 parts by mass, still more preferably from 0.5 to 5 parts by mass with respect to 100 parts by mass of the ethylene/propylene/non-conjugated polyene copolymer.

((G) Crosslinking aid)

Examples of the crosslinking aid (G) include: sulfur; quinonedioxime compounds such as p-quinonedioxime; polyfunctional monomers, such as (meth) acrylate compounds, such as trimethylolpropane triacrylate and polyethylene glycol dimethacrylate; allyl compounds such as diallylphthalate and triallyl cyanurate; maleimide compounds such as m-phenylene bismaleimide; and divinylbenzene. The crosslinking aid (G) may be used singly or in combination of two or more kinds.

The compounded amount of the crosslinking aid (G) is not particularly limited, but it is usually 0 to 4.0 parts by mass, and is preferably 0 to 3.5 parts by mass, more preferably 0 to 3.0 parts by mass, still more preferably 0.1 to 3.0 parts by mass, with respect to 100 parts by mass of the ethylene/propylene/non-conjugated polyene copolymer. It is also desirable that the compounded amount of the crosslinking aid (G) is preferably with in a range from 0.5 to 2 mols, more preferably approximately equimolar, with respect to 1 mol of the organic peroxide (B).

((H) Onium salt)

Examples of the onium salt (H) include, for example, quaternary ammonium salts, quaternary phosphonium salts, oxonium salts, sulfonium salts, cyclic amine, and monofunctional amine compounds. Among them, quaternary ammonium salts and quaternary phosphonium salts are preferable.

Such onium salts (H) may be used singly or in combination of the two or more kinds.

Examples of quaternary ammonium salts include, but are not particularly limited to, dialkyl(C14-18) dimethylammonium chloride, 1,8-diazabicyclo[5,4,0]-7-undecenium salts, 8-methyl-1,8-diazabicyclo[5,4,0]-7-undecenium chloride, 8-methyl-1,8-diazabicyclo[5,4,0]-7-undecenium iodide, 8-methyl-1,8-diazabicyclo[5,4,0]-7-undecenium hydroxide, 8-methyl-1,8-diazabicyclo[5,4,0]-7-undecenium methyl sulfate, 8-ethyl-1,8-diazabicyclo[5,4,0]-7-undecenium bromide, 8-propyl-1,8-diazabicyclo[5,4,0]-7-undecenium bromide, 8-dodecyl-1,8-diazabicyclo[5,4,0]-7-undecenium chloride, 8-dodecyl-1,8-diazabicyclo[5,4,0]-7-undecenium hydroxide, 8-eicosyl-1,8-diazabicyclo[5,4,0]-7-undecenium chloride, 8-tetracosyl-1,8-diazabicyclo[5,4,0]-7-undecenium chloride, 8-benzyl-1,8-diazabicyclo[5,4,0]-7-undecenium chloride (hereinafter referred to as "DBU-B"), 8-benzyl-1,8-diazabicyclo[5,4,0]-7-undecenium hydroxide, 8-phenethyl-1,8-diazabicyclo[5,4,0]-7-undecenium chloride, and 8-(3-phenyl propyl)-1,8-diazabicyclo[5,4,0]-7-undecenium chloride. Among them, dialkyl(C14-18) dimethylammonium chloride is preferable.

Examples of quaternary phosphonium salts include, but are not particularly limited to, for example, tetrabutyl phosphonium chloride, benzyltriphenylphosphonium chloride (hereinafter referred to as "BTPPC"), benzyltrimethylphosphonium chloride, benzyltributylphosphonium chloride, tributylallyl phosphonium chloride, tributyl-2-methoxy propylphosphonium chloride, and benzylphenyl (dimethylamino) phosphonium chloride. Among them, in terms of vulcanization performance and physical properties of vulcanized products, benzyltriphenylphosphonium chloride (BTPPC) is preferable.

It is also possible to use a solid solution of, a quaternary ammonium salt, a quaternary phosphonium salt, and bisphenol AF and a compound disclosed in JP H11-147891 A.

In addition, examples of an amine compound include, for example, hexamethylenediaminecarbamate, N,N'-dicinnamylidene-1,6-hexamethylenediamine, and 4,4'-bis(amino cyclohexyl ) methanecarbamate. Among them, N,N'-dicinnamylidene-1,6-hexamethylenediamine is preferable.

As the onium salt (H), a commercially available product may be used. For example, "LIPOQUAD 2HT FLAKE" (manufactured by Lion Specialty Chemicals Co., Ltd., dialkyl(C14-18) dimethylammonium chloride, also referred to as "LIPOQUAD 2HTF" in this invention) can be used.

The compounded amount of the onium salt (H) to be used is preferably 0.2 parts by mass or more, more preferably from 0.2 parts by mass to 10 parts by mass, and still more preferably from 0.5 parts by mass to 8 parts by mass with respect to 100 parts by mass of the ethylene/propylene/non-conjugated polyene copolymer. When the onium salt (H) is used in the above range with an inorganic compound containing oxygen and at least one kind of element selected from Group 2 elements and Group 13 elements described in (I) below, excellent adhesiveness to the layer (4) (a layer prepared using a halogen-containing polymer) is achieved, which is preferable.

Although components classified as onium salts (H) are described as other components (J), a component (H) and a compound corresponding to the other component are classified as components (H) in a case in which a component (H) and a component (I) described below are used as components constituting the layer.

((I) Inorganic compound containing oxygen and at least one element selected from Group 2 elements and Group 13 elements)

Examples of the inorganic compound containing oxygen and at least one element selected from Group 2 elements and Group 13 elements (I) include, but are not particularly limited to, for example, an oxide, a hydroxide, a carbonate, and a hydrotalcite compound at least one element selected from Group 2 elements and Group 13 elements.

Examples of at least one element selected from Group 2 elements and Group 13 elements include, for example, at least one element selected from Mg, Ca, Ba, and Al.

As the inorganic compound containing oxygen and at least one element selected from Group 2 elements and Group 13 elements (I), a commercially available product may be used. For example, "Kyowamag 150" (manufactured by Kyowa Chemical Industry Co., Ltd., magnesium oxide) or DHT-4A (manufactured by Kyowa Chemical Industry Co., Ltd., hydrotalcite compound: $Mg_{4.3}Al_2$ (OH) $1_{2.6}CO_3/mH_2O$) can be used.

When the inorganic compound containing oxygen and at least one element selected from Group 2 elements and Group 13 elements (I) is used, the compounded amount is preferably 7 parts by mass or more and more preferably from 7 parts by mass to 100 parts by mass with respect to 100 parts by mass of the ethylene/propylene/non-conjugated polyene copolymer. The lower limit of the inorganic compound containing oxygen and at least one element selected from Group 2 elements and Group 13 elements (I) is particularly preferably 10 parts by mass or more. The upper limit thereof is more preferably 80 parts by mass or less, still more preferably 50 parts by mass or less, particularly preferably 40 parts by mass or less, and most preferably 35 parts by mass or less.

Although components classified as inorganic compounds containing oxygen at least one element selected from Group 2 elements and Group 13 elements (I) are described for the metal oxide (F) and the other component (J), compounds corresponding to the component (I) and the other component are classified as components (I) in a case in which the components (H) and (I) are used as components constituting the layer.

((J) Additional component)

Examples of the additional component (J) include various additive components conventionally added to the rubber composition such as a filler, a foaming agent, an antioxidant, a processing aid, surfactants, and a weathering agent. A resin component other than the ethylene/propylene/non-conjugated polyene copolymer may be contained, as necessary.

Examples of the filler include inorganic fillers such as silica, activated calcium carbonate, light calcium carbonate, heavy calcium carbonate, fine powdered talc, talc, fine powder silicic acid, and clay. These fillers can be in an amount of from 0 to 300 parts by mass and preferably from about 0 to 200 parts by mass with respect to 100 parts by mass of the ethylene/propylene/non-conjugated polyene copolymer. When a filler is used, a layered product can be obtained which has improved mechanical properties, such as tensile strength, tear strength, and abrasion resistance, and increased hardness without impairing its other physical properties.

The resin composition according to this invention preferably contains an antioxidant from the viewpoint of capability to prolong its material life. Examples of the antioxidant include:

stabilizing agents based on aromatic secondary amines, such as phenylnaphthylamine, 4,4'-($\alpha$,$\alpha$-dimethylbenzyl)diphenylamine, N,N'-di-2-naphthyl-p-phenylenediamine;
stabilizing agents based on phenol, such as 2,6-di-t-butyl-4-methylphenol, tetrakis-[methylene-3-(3',5'-di-t-butyl-4'-hydroxyphenyl)prop ionate]methane;
stabilizing agent based on thioether such as bis[2-methyl-4-(3-n-alkylthiopropionyloxy)-5-t-butylphenyl]su lfide;

stabilizing agent based on benzoimidazole such as 2-mercaptobenzoimidazole;
stabilizing agent based on dithiocrabamates such as nickel dibutyldithiocarbamate;
stabilizing agent based on quinoline such as a polymerized product of 2,2,4-trimethyl-1,2-dihydroquinoline, and the like. These may be used alone or in combination of two or more kinds.

The antioxidant can be used in an amount of, for example, 5 parts by mass or less, preferably 3 parts by mass or less, with respect to 100 parts by mass of the ethylene/propylene/non-conjugated polyene copolymer.

The ethylene/propylene/non-conjugated polyene copolymer also can appropriately contain, if necessary, various additives that can be compounded in known rubber compositions.

The ethylene/propylene/non-conjugated polyene copolymer may be mixed with a surfactant. Examples of the surfactant include amines, such as di-n-butylamine, dicyclohexylamine, monoethanolamine, triethanolamine, " Acting B" (manufactured by YOSHITOMI PHARMACEUTICAL INDUSTRIES, LTD.), "Acting SL" (manufactured by YOSHITOMI PHARMACEUTICAL INDUSTRIES, LTD.), polyethylene glycol, diethylene glycol, polyethylene glycol, lecithin, triallyltrimellitate, and compounds of zinc aliphatic or aromatic carboxylate (example; "Struktol activator 73", "Struktol IB 531", and "Struktol FA 541", manufactured by Schill+Seilacher GmbH), "ZEONET ZP" (manufactured by ZEON CORPORATION), octadecyltrimethylammonium bromide, synthesized hydrotalcite, and special quaternary ammonium compounds (example; "LIPOQUAD 2HTF"(manufactured by Lion Specialty Chemicals Co., Ltd., dialkyl (C14-18) dimethylammonium chloride)), and the like. LIPOQUAD 2HTF is the most preferable surfactant.

When the ethylene/propylene/non-conjugated polyene copolymer is mixed with a surfactant, the compounded amount of the surfactant is, for example, about 0.2 to 10 parts by mass, preferably about 0.3 to 8 parts by mass, more preferably about 0.3 to 7 parts by mass, particularly preferably about 0.5 to 7 parts by mass, and most preferably about 1 to 6 parts by mass with respect to 100 parts by mass of the ethylene/propylene/non-conjugated polyene copolymer. The surfactant can be appropriately selected depending on its use, and it can be used singly or in combination of the two or more kinds.

The ethylene/propylene/non-conjugated polyene copolymer may be mixed with a pseudo-gel inhibitor. Examples of the pseudo-gel inhibitor include, for example, "NHM-007" (manufactured by Mitsui Chemicals, Inc.).

When the ethylene/propylene/non-conjugated polyene copolymer is mixed with a pseudo-gel inhibitor, the compounded amount thereof is within a range usually from 0.1 to 15 parts by mass, and preferably from 0.5 to 12 parts by mass, more preferably 1.0 to 10 parts by mass, with respect to 100 parts by mass of the ethylene/propylene/non-conjugated polyene copolymer.

The ethylene/propylene/non-conjugated polyene copolymer may be further mixed with an additional additive, as necessary. Examples of the additional additive include agents such as heat stabilizers, weathering stabilizers, antistatic agents, colorants, lubricants, and thickeners.

The ethylene/propylene/non-conjugated polyene copolymer may be mixed with an additional resin component other than the ethylene/propylene/non-conjugated polyene copolymer, as necessary. Examples of the additional resin component include, but are not particularly limited to, polyolefin resins.

The ethylene/propylene/non-conjugated polyene copolymer mixed with a polyolefin resin enables controlling the hardness of products from the composition and decreasing its compound viscosity at processing temperature, resulting in further improvement of its processability. It is also preferable because it can be treated as a thermoplastic elastomer, resulting in its easier handling property and more choices of kneading methodology.

The polyolefin resin having a number-average molecular weight, as measured by GPC, of 10,000 or more in terms of polystyrene standard is suitably used.

Examples of the polyolefin resin include an $\alpha$-olefin homopolymer and an $\alpha$-olefin copolymer. Examples of the $\alpha$-olefin homopolymer include polyethylene, polypropylene, and the like, and examples of the $\alpha$-olefin copolymer include a copolymer of ethylene/$\alpha$-olefin having 3 to 20 carbon atoms. Examples of the copolymer of ethylene/$\alpha$-olefin having 3 to 20 carbon atoms include ethylene-propylene rubber (EPR), propylene-ethylene rubber (PER), ethylene-butene rubber (EBR), ethylene-octene rubber (EOR), and the like.

Among these polyolefin resins, polyethylene, ethylene/$\alpha$-olefin copolymer, and polypropylene are preferable.

The polyolefin resins can be used singly or in combination of the two or more kinds.

When a polyolefin resin is added to the ethylene/propylene/non-conjugated polyene copolymer, the content of the polyolefin resin is, for example, from 1 to 100 parts by mass, preferably from 5 to 80 parts by mass, and more preferably from 10 to 50 parts by mass or thereabouts with respect to 100 parts by mass of the ethylene/propylene/non-conjugated polyene copolymer.

In the above range, it is possible to control the hardness of a layered product and decrease its compound viscosity at processing temperature, resulting in further improvement of its processability. It is also preferable because layered product can be treated as a thermoplastic elastomer, resulting in its easier handling property and more choices of kneading methodology.

(Layer (2))

The layer (2) is a layer prepared using an ethylene/carboxylic acid copolymer.

It is possible to prepare the layer (2) using at least an ethylene/carboxylic acid copolymer. In general, it is a layer prepared using not only an ethylene/carboxylic acid copolymer but also other components as starting materials. The layer (2) is usually a layer prepared by crosslinking using an ethylene/carboxylic acid copolymer. Examples of components other than the ethylene/carboxylic acid copolymer include: (B) an organic peroxide; (C) carbon black; (D) an antioxidant; (E) a softening agent; (F) a metal oxide; (G) a crosslinking aid; (H) an onium salt; (I) an inorganic compound containing oxygen and at least one element selected from Group 2 elements and Group 13 elements; and (J) other components described above for the layer (1). The amounts of (B) to (J) in the layer (2) are specified with respect to the amount of ethylene/propylene/non-conjugated polyene copolymer for the layer (1). The amount of the ethylene/propylene/non-conjugated polyene copolymer is replaced by the amount of the ethylene/carboxylic acid copolymer.

(Layer (3))

The layer (3) is a layer prepared using an acrylic-type rubber.

It is possible to prepare the layer (3) using at least an acrylic-type rubber. In general, it is a layer prepared using not only an acrylic-type rubber but also other components as starting materials. The layer (3) is a layer prepared by crosslinking using an acrylic-type rubber. Examples of components other than the acrylic-type rubber include: (B) an organic peroxide; (C) carbon black; (D) an antioxidant; (E) a softening agent; (F) a metal oxide; (G) a crosslinking aid; (H) an onium salt; (I) an inorganic compound containing oxygen and at least one element selected from Group 2 elements and Group 13 elements; and (J) other components described above for the layer (1). The amounts of (B) to (J) in the layer (3) are specified with respect to the amount of ethylene/propylene/non-conjugated polyene copolymer for the layer (1). The amount of the ethylene/propylene/non-conjugated polyene copolymer is replaced by the amount of the acrylic-type rubber.

(Layer (4))

The layer (4) is a layer prepared using a halogen-containing polymer.

It is possible to prepare the layer (4) using at least a halogen-containing polymer. In general, it is a layer prepared using not only a halogen-containing polymer but also other components as starting materials. The layer (4) is a layer prepared by crosslinking using a halogen-containing polymer. Examples of components other than the halogen-containing polymer include: (B) an organic peroxide; (C) carbon black; (D) an antioxidant; (E) a softening agent; (F) a metal oxide; (G) a crosslinking aid; (H) an onium salt; (I) an inorganic compound containing oxygen and at least one element selected from Group 2 elements and Group 13 elements; and (J) other components described above for the layer (1). The amounts of (B) to (J) in the layer (4) are specified with respect to the amount of ethylene/propylene/non-conjugated polyene copolymer for the layer (1). The amount of the ethylene/propylene/non-conjugated polyene copolymer is replaced by the amount of the halogen-containing polymer.

As a method of crosslinking a halogen-containing polymer such as a fluorine rubber, polyol crosslinking, peroxide crosslinking, and amine crosslinking are known in general. Among them, at present, amine crosslinking is unlikely to be used because of the difficulty of storing materials.

It is possible to use the organic peroxide (B) to conduct peroxide crosslinking of a halogen-containing polymer such as a fluorine rubber.

It is possible to use a polyol-based crosslinking agent to conduct polyol crosslinking of a halogen-containing polymer such as a fluorine rubber.

As a polyol-based crosslinking agent, bisphenols are preferable. Specific examples thereof include, for example, polyhydroxyaromatic compounds such as 2,2'-bis(4-hydroxyphenyl) propan[bisphenol A], 2,2-bis(4-hydroxyphenyl) hexafluoropropan[bisphenol AF], bis(4-hydroxyphenyl) sulfone [bisphenol S], bisphenol A bis(diphenyl phosphate), 4,4'-dihydroxydiphenyl , 4,4'-dihydroxydiphenyl methane, and 2,2-bis(4-hydroxyphenyl) butane[bisphenol B].

As a polyol-based crosslinking agent, preferably bisphenol A or bisphenol AF is used. It is also possible to use, as a polyol-based crosslinking agent, an alkali metal salt or an alkaline-earth metal salt of the polyhydroxyaromatic compound.

It is also possible to use, as a polyol-based crosslinking agent, a commercially available master batch containing a starting material rubber and a polyol-based crosslinking agent. Examples of a commercially available master batch include, for example, Curative VC#30(manufactured by DuPont Dow Elastomers L.L.C.: containing 50 wt% of a crosslinking agent [bisphenol AF]).

Such crosslinking agents may be used singly or in combination of the two or more kinds.

It is possible to use the following as a filler in the layer (4): metallic hydroxides such as magnesium hydroxide,

aluminum hydroxide, and calcium hydroxide; carbonates such as magnesium carbonate, aluminum carbonate, calcium carbonate, and barium carbonate; silicates such as magnesium silicate, calcium silicate, sodium silicate, aluminum silicate; sulfates such as aluminum sulfate, calcium sulfate, and barium sulfate; metallic sulfides such as synthetic hydrotalcite, molybdenum disulfide, iron sulfide, and Copper sulfide; silicon oxides such as wet silica, dry silica, fine quartz powder, and glass fibers; inorganic fillers such as diatomous earth, asbestos, lithopone (zinc sulfide/barium sulfide), graphite, carbon black, carbon fluoride, calcium fluoride, coke, talc, mica powder, wollastonite, carbon fibers, aramid fibers, and various whiskers, as well as, organic stiffeners and organic fillers.

It is also possible to optionally add, as the other component (J), an acid acceptor, an ultraviolet absorber, a flame retardant, oil resistance improver, an antiscorching agent, a tackifier, and the like to the halogen-containing polymer.

The layer (4) may be formed using a commercially available composition containing a fluorine rubber which is a halogen-containing polymer and a crosslinking agent. Examples of a commercially available composition containing a fluorine rubber and a crosslinking agent include, for example, DAI-EL DC-2270F and DAI-EL DC-4070 (manufactured by Daikin Industries, Ltd.). DAI-EL DC-2270F is a composition containing a polyol-based crosslinking agent, a filler, and an acid acceptor, in addition to a fluorine rubber. DAI-EL DC-4070 is a composition containing an organic peroxide and a filler, in addition to a fluorine rubber.

(Method of preparing materials constituting each layer)

A method of preparing materials constituting each layer is not particularly limited. When the layer (1) consists of an ethylene/propylene/non-conjugated polyene copolymer, the layer (2) consists of an ethylene/carboxylic acid copolymer, the layer (3) consists of an acrylic-type rubber, and/or the layer (4) consists of a halogen-containing polymer, the above-described polymers (rubbers) can be directly used.

Materials constituting each layer can be prepared by the following method when the materials include a component other than any of the above-described polymers (rubbers), which means when the layer (1) comprises a resin composition containing an ethylene/propylene/non-conjugated polyene copolymer, the layer (2) comprises a resin composition containing an ethylene/carboxylic acid copolymer, the layer (3) comprises a resin composition containing an acrylic-type rubber, and/or the layer (4) comprises a resin composition containing a halogen-containing polymer.

The resin composition can be prepared by appropriately mixing: a polymer (rubber) (ethylene/propylene/non-conjugated polyene copolymer (layer (1)), an ethylene/carboxylic acid copolymer (layer (2)), an acrylic-type rubber (layer (3)), and a halogen-containing polymer (layer (4))); (B) an organic peroxide, (C) carbon black; (D) an antioxidant; (E) a softening agent; (F) a metal oxide; (G) a crosslinking aid; (H) an onium salt; (I) an inorganic compound containing oxygen and at least one element selected from Group 2 elements and Group 13 elements; and (J) other components.

Methods of preparing the resin composition include, but are not particularly limited to, a method, such as a method of mixing each component contained in the resin composition by using a conventionally known kneading machine such as a mixer, a kneader, and a roll, and a method of preparing a solution in which each component contained in the resin composition is dissolved or dispersed, followed by removing the solvent.

(Layered product)

As described above, the layered product of this invention is a layered product, which includes at least one type of layer selected from the following layer (1), and further includes at least one type of layer selected from the following layers (3) and (4), wherein at least one layer of the at least one type of layer selected from the layer (1) is directly in contact with or adjacent via an adhesive layer to of the at least one type of layer at least one layer selected from the layers (3) and (4).

Layer (1): a layer prepared using an ethylene/propylene/non-conjugated polyene copolymer
Layer (2): a layer prepared using an ethylene/carboxylic acid copolymer
Layer (3): a layer prepared using an acrylic-type rubber
Layer (4): a layer prepared using a halogen-containing polymer

The layered product of this invention has at least one type of layer selected from the layer (1) and at least one type of layer selected from the layers (3) and (4). The layer configuration of the layered product of this invention is not particularly limited as long as the at least one layer of the at least one type of layer selected from the layer (1) is directly in contact with or adjacent via an adhesive layer to the at least one layer of the at least one type of layer selected from the layers (3) and (4) .

The thickness of each layer constituting the layered product is not particularly limited. However, the thickness of layer (1) is usually 1 to 30 mm and preferably 3 to 10 mm, the thickness of layer (2) is usually 1 to 30 mm and preferably 1 to 5 mm, the thickness of layer (3) is usually 1 to 30 mm and preferably 1 to 5 mm, and the thickness of layer (4) is

usually 1 to 30 mm and preferably 1 to 5 mm. The total thickness of the layered product is also not particularly limited. However, it is usually from 5 to 31 mm and preferably from 5 to 20 mm. In addition, in a case in which the layered product has an adhesive layer, the thickness is, but is not particularly limited to, usually from 0.1 to 10 um and preferably from 0.1 to 5 mm.

In a preferred embodiment of the layered product of this invention, the layer (1) and the layer (4) are directly in contact with each other in the layered product. In a case in which a fluorine rubber and a non-polar rubber are layered, it is common to layer them via an adhesive layer. Nevertheless, the inventors found that it is possible to directly bond the layer (1) and the layer (4), which are used in combination, without providing an adhesive layer.

A layered product, in which the layer (1) and the layer (4) are directly in contact with each other, is not particularly limited in terms of the layer configuration of the layered product as a whole as long as it has a layer (1)/layer (4) configuration. Examples of a layered product having a layer configuration in which the layer (1) and the layer (4) are directly in contact with each other include a layered product having a layer (1)/layer (4) configuration, a layered product having a layer (1)/layer (4)/layer (1) configuration, a layered product having a layer (4)/layer (1)/layer (4) configuration, a layered product having a layer (1)/layer (4)/layer (1)/layer (4) configuration, and a layered product having a layer (1)/layer (4)/adhesive layer /layer (2) configuration.

In another preferred embodiment of the layered product of this invention, the layer (1) and the layer (3) are directly in contact with each other in the layered product. The present inventors found that it is possible to directly bond the layer (1) and the layer (3), which are used in combination, without providing an adhesive layer.

A layered product, in which the layer (1) and the layer (3) are directly in contact with each other, is not particularly limited in terms of the layer configuration of the layered product as a whole as long as it has a layer (1)/layer (3) configuration. Examples of a layered product having a layer configuration in which the layer (1) and the layer (3) are directly in contact with each other include a layered product having a layer (1)/layer (3) configuration, a layered product having a layer (1)/layer (3)/layer (1) configuration, a layered product having a layer (3)/layer (1)/layer (3) configuration, a layered product having a layer (1)/layer (3)/layer (1)/layer (3) configuration, and a layered product having a layer (1)/layer (3)/adhesive layer /layer (2) configuration.

In another preferred embodiment of the layered product of this invention, at least one type of layer selected from the layer (1) is bonded to the layer (3) via an adhesive layer in the layered product. The present inventors found that the use of an adhesive enables sufficient bonding in such embodiment.

A layered product, in which at least one type of layer selected from the layer (1) is bonded to the layer (3) via an adhesive layer, is not particularly limited in terms of the layer configuration of the layered product as a whole as long as it has a layer (1) /adhesive layer/layer (3) configuration. Examples of a layered product having a layer configuration in which at least one type of layer selected from the layer (1) is bonded to the layer (3) via an adhesive layer include a layered product having a layer (1) /adhesive layer/layer (3) configuration, a layered product having a layer (1) /adhesive layer/layer (3)/adhesive layer/layer (1) or (2) configuration, a layered product having a layer (3)/adhesive layer/layer (1) /adhesive layer/layer (3) configuration, and a layered product having a layer (1) /adhesive layer/layer (3)/adhesive layer/layer (1) or (2)/adhesive layer/layer (3) configuration.

From a different viewpoint of a preferred embodiment of the layered product of this invention, at least one type of layer selected from the layers (1) and (2) contains 0.2 parts by mass or more of an onium salt with respect to 100 parts by mass of the copolymer, and an inorganic compound containing oxygen and at least one element selected from Group 2 elements and Group 13 elements is contained in an amount of 7 parts by mass or more with respect to 100 parts by mass of the copolymer in the layered product. The layered product is more preferably a layered product, in which at least one type of layer selected from the layers (1) and (2) contains 0.2 to 10 parts by mass of an onium salt with respect to 100 parts by mass of the copolymer, and an inorganic compound containing oxygen and at least one element selected from Group 2 elements and Group 13 elements is contained in an amount of 7 to 100 parts by mass with respect to 100 parts by mass of the copolymer. When at least one type of layer selected from the layers (1) and (2) contains an onium salt and an inorganic compound containing oxygen and at least one element selected from Group 2 elements and Group 13 elements, adhesiveness to at least one type of layer selected from the layers (3) and (4), and preferably the layer (4), improves, which is preferable.

In a case in which a non-conjugated polyene of the ethylene/propylene/non-conjugated polyene copolymer contained in the layer (1) is VNB, which means that the copolymer is an ethylene/propylene/VNB copolymer, the layered product has excellent fatigue resistance, which is preferable. In a case in which the B value of the ethylene/propylene/VNB copolymer is particularly high, and specifically, the B value is from 1.22 to 1.40, the layered product has particularly excellent fatigue resistance, which is preferable. The layered product is particularly useful because it has more excellent fatigue resistance than a conventionally known layered product in which an acrylic rubber layer and a fluorine rubber layer are stacked.

In a case in which the layered product of this invention has an adhesive layer, an adhesive constituting the adhesive layer is not particularly limited. A commercially available product that can be used as such adhesive is, for example, Chemlok XJ150

(manufactured by Chemlok)

(Method for producing layered product)

A method for producing the layered product of this invention is not particularly limited. However, examples of the method include the following methods (a) to (e) comprising obtaining a layered product. According to the methods (a) to (e), a crosslinking step may be conducted after obtaining a layered product. Alternatively, it is also possible to obtain a layered product having a layer comprising a crosslinked polymer or rubber by conducting a secondary vulcanization step in an oven or the like after primary vulcanization. At least one type of layer selected from the layer (1) is also referred to as "layer A, " and at least one type of layer selected from the layer (3) and the layer (4) is also referred to as "layer B."

(a) Method of obtaining a layered product, in which a layer A and a layer B are directly in contact with each other, by separately mixing materials constituting the layer A and materials constituting the layer B by using a kneader, a roll, or a mixer such as a Banbury mixer or an internal mixer and simultaneously extruding the kneaded products by an extruder.
(b) Method of obtaining a layered product, in which a layer A and a layer B are directly in contact with each other, by mixing materials constituting the layer A by using a kneader, a roll, or a mixer such as a Banbury mixer or an internal mixer and extruding the kneaded product by an extruder to form the layer A, mixing materials constituting the layer B by using a kneader, a roll, or a mixer such as a Banbury mixer or an internal mixer, and extruding the kneaded product on the layer A by an extruder.
(c) Method of obtaining a layered product, in which a layer A and a layer B are directly in contact with each other, by mixing materials constituting the layer B by using a kneader, a roll, or a mixer such as a Banbury mixer or an internal mixer and extruding the kneaded product by an extruder to form the layer B, mixing materials constituting the layer A by using a kneader, a roll, or a mixer such as a Banbury mixer or an internal mixer, and extruding the kneaded product on the layer B by an extruder.
(d) Method of obtaining a layered product, in which a layer A and a layer B are directly in contact with each other, by mixing materials constituting the layer A by using a kneader, a roll, or a mixer such as a Banbury mixer or an internal mixer and extruding the kneaded product by an extruder to form the layer A, mixing materials constituting the layer B by using a kneader, a roll, or a mixer such as a Banbury mixer or an internal mixer and extruding the kneaded product by an extruder to form the layer B, and directly bonding the layer A and the layer B.
(e) Method of obtaining a layered product, in which a layer A and a layer B are adjacent to each other via an adhesive layer, by mixing materials constituting the layer A by using a kneader, a roll, or a mixer such as a Banbury mixer or an internal mixer and extruding the kneaded product by an extruder to form the layer A, mixing materials constituting the layer B by using a kneader, a roll, or a mixer such as a Banbury mixer or an internal mixer and extruding the kneaded product to form the layer B, and bonding the layer A and the layer B using an adhesive.

When a layered product is produced, it is preferable to conduct press shaping of a layered produce in which the layer A and the layer B are adjacent to each other directly or via an adhesive layer in view of the improvement of peel strength between the layer A the layer B.

(Crosslinked step or primary vulcanization)

A crosslinked step or primary vulcanization is a step of preliminarily adding components necessary for crosslinking such as a crosslinking agent to materials constituting the layer A and materials constituting the layer B and performing crosslinking by heating (for example, 150°C to 240°C), a step of irradiating a layered product with an electron beam (for example, an electron beam having an energy of 0.1 to 10 MeV) to perform crosslinking, or the like. Irradiation with the electron beam is carried out so that the dose absorbed into the resin composition may be usually 0.5 to 36 Mrads, preferably 0.5 to 20 Mrads, and more preferably 1 to 10 Mrads.
When crosslinking is carried out by heating during the crosslinked step or primary vulcanization, it is preferable to carry out heating while conducting press-shaping in view of the improvement of peel strength between the layer A and the layer B.

(Secondary vulcanization)

Secondary vulcanization is a step carried out after the primary vulcanization for sufficiently improving vulcanization (crosslinking) by performing heating (for example, 150°C to 200°C) .

<Application>

As the layered product of this invention can satisfy various required characteristics because of its layer configuration, it can be used for various applications.

The layered product of this invention can be used for various applications. The layered product of this invention can be used for members of automobiles, motorbikes, industrial machinery, construction machinery, agricultural machinery, and the like. Specific examples of the members include rolls for industrial use, packings (for example, capacitor packing), gaskets, belts (for example, heat-insulating belt, belt for copying machines, and conveyance belt), hoses such as hoses for cars (for examples, turbocharger hose, water hose, brake reservoir hose, radiator hose, and air hose), anti-vibration rubbers, anti-vibration or vibration-controlling materials (for example, engine mount and motor mount), muffler hangers, cables (ignition cable, cabtire cable, and high tension cable), materials for wire cover (materials for covering high voltage wire, low voltage wire, and wire used in vessels), glass run channels, colored skin materials, paper-feeding rolls, and roofing sheets.

The ethylene/propylene/non-conjugated polyene copolymer also enables obtaining a crosslinked article excellent not only in moldability and crosslinking property, but also in thermal stability, and therefore, the ethylene/propylene/non-conjugated polyene copolymer having a layer (1) can be suitably used in applications in which their long-term use under high temperature is expected. In a case in which the ethylene/propylene/non-conjugated polyene copolymer is an ethylene/propylene/VNB copolymer, it is particularly excellent in terms of fatigue resistance, which means that the layered product can be usable under extreme condition for a long period of time. This is preferable.

The layered product of this invention is suitably used for automotive interior and exterior parts and applications requiring heat resistance among others. An example application of the layered product is a hose which includes the layered product of this invention at least as a part thereof. Although the hose does not have any particular limitation in its use, it is preferably a hose used in any one of applications for automobiles, motorbikes, industrial machinery, construction machinery, and agricultural machinery. More specifically, it is suitably used in applications for hoses including the turbocharger hose, the brake reservoir hose, and the radiator hose, and particularly suitably used in the turbocharger hose for automobiles.

The hose of this invention may include the layered product of this invention as at least a part thereof, and it may be a hose consisting of the layered product of this invention.

The turbocharger hose of this invention has a multilayer structure including preferably a layer composed of a crosslinked article of a composition comprising an ethylene/propylene/non-conjugated polyene copolymer and a layer composed of a different material such that it can endure extreme use conditions under high temperature and high pressure. In the layered product of this invention, only one layer may be formed with a crosslinked article, or two or more layers may be formed with a crosslinked article.

Methods of producing the turbocharger hose of this invention does not have any particular limitation, and they include, for example, a method of obtaining a turbocharger hose (layered product), which method shapes an uncured layer-structured turbocharger hose by using extrusion molding, coextrusion molding, winding of a sheet material, or a combination thereof, and then heats it by using steam among others. The uncured turbocharger hose is preferably highly capable of retaining its shape without shrinking or deformation.

EXAMPLES

Although this invention will be described more specifically based on the following Examples, the invention is not limited thereto.

(Measurement and evaluation method)

In Production Examples, Examples, and Comparative Examples below, measurement and evaluation methods of respective characteristics are as follows.

(Composition of ethylene/propylene/non-conjugated polyene copolymer and B value)

The mass fraction (% by mass) of each structural unit of the ethylene/propylene/non-conjugated polyene copolymer and the B value were determined from measurement values by using $^{13}C$-NMR. The measurement values were obtained by measuring the $^{13}C$-NMR spectrum of the copolymer by using a nuclear magnetic resonance apparatus, Model ECX400P (manufactured by JEOL Ltd.) at a measurement temperature of 120°C, in a measurement solvent of orthodicholorbenzene/deuterated benzene = 4/1, with a cumulative number of 8,000.

(Intrinsic viscosity [η])

The intrinsic viscosity [η] (dl/g) of the ethylene/propylene/non-conjugated polyene copolymer was measured by using a fully automated intrinsic viscometer manufactured by RIGO CO., LTD., at a temperature of 135°C in a measurement solvent of decalin.

(Weight-average molecular weight (Mw), number-average molecular weight (Mn), and molecular weight distribution (Mw/Mn))

The weight-average molecular weight (Mw), the number-average molecular weight (Mn), and the molecular weight distribution (Mw/Mn) are numerical values in terms of polystyrene, measured by gel permeation chromatography (GPC). The measuring apparatus and a measurement condition are as follows. The molecular weight was calculated based on the conversion method using a calibration curve generated by using commercial monodispersed polystyrene.

Apparatus: gel permeation chromatograph Model Alliance GP2000 (manufactured by Waters),
Analyzer: Empower2 (manufactured by Waters),
Column: TSKgel GMH6-HT × 2 + TSKgel GMH6-HTL × 2 (7.5 mm I.D. 30 cm, manufactured by Tosoh Corporation),
Column temperature: 140°C,
Mobile phase: o-dichlorobenzene (containing 0.025% of BHT),
Detector: refractive index detector (RI), Flow rate: 1.0 mL/min,
Load quantity: 400 μL,
Sampling interval: 1 s,
Column calibration: monodispersed polystyrene (manufactured by Tosoh Corporation),
Molecular-weight: expressed in terms of EPR in the old method/calibrating method taking viscosity into account.

(T-peel test)

Peel strength of the layered products was measured by the method described below.

T-peel test of the layered products obtained in the Examples and Comparative Examples was conducted for determining peel strength: measurement temperature: 23.0°C; test speed: 200.0 mm/min; and test piece width: 80.0 mm.

(Surface swelling test)

Surface swelling test of the layered products was conducted by the method described below.

The crosslinked rubber sheets (layered product) 5 mm in thickness obtained in the Examples and Comparative Examples were cut into 8 cm × 8 cm square pieces, thereby obtaining layered products for measurement.

A circular embankment was made using a silicone sealant on a layer B of each layered product for measurement. The embankment was formed on the layer B such that it had an inner diameter of 5 cm and a height of about 2 cm.

A lubricant (IRM903 manufactured by Japan Sun Oil Company, Ltd.) in an amount of 2.4 g was poured inside the embankment.

Temperature was maintained at 80°C and the surface condition was observed 1 hour later.

Visual observation was conducted by evaluating a case in which the layered product surface appeared in the form of a protrusion due to swelling of the rubber of the layered product above the lubricant surface as "×" (swelling) and a case in which the layered product did not appear above the lubricant surface as "o" (no swelling).

(Modulus, tensile strength at break, tensile elongation at break)

Modulus, tensile strength at break, and tensile elongation at break of the sheets were measured by the methods described below.

Each sheet was punched out to prepare a dumbbell test piece of Type 3 described in JIS K 6251 (1993), which was used for a tensile test, to measure tensile stress (100% modulus (M100)) at a tension rate of 100%, tensile stress (200% modulus (M200)) at a tension rate of 200%, tensile stress (300% modulus (M300)) at a tension rate of 300%, tensile strength at break (TB), and tensile elongation at break (EB) under a condition of a measurement temperature of 25°C and a tensile speed of 500 mm/minute according to the method specified in the section 3 of JIS K 6251.

(Hardness test (Shore A hardness))

According to JIS K 6253, sheet hardness (Type A durometer, HA) was measured by using a test piece of about

12 mm in thickness, which was made of six sheet-like rubber shaped articles of 2 mm in thickness having a smooth surface, the rubber shaped articles being stacked on the top of a flat portion of each other. A test piece which was contaminated by foreign substances, or which had foams or a scratch was not used. The dimension of the measurement surface of the test piece was taken to be large enough so that a pressure needle tip might enable measuring the hardness at a point distant by 12 mm or more from the edge of the test piece.

(Heat aging resistance test)

A heat aging resistance test was carried out according to JIS K 6257. Specifically, each sheet was placed in an oven at 180°C for 168 hours to be aged, and then a tensile test was carried out under a condition of a measurement temperature of 23°C, a tension rate of 500 mm/minute, to measure tensile strength at break (TB) and tensile elongation at break (EB) . Further, hardness was measured by the same method as in the above-described section (Hardness test (Shore A hardness)) .

(Flexural fatigue resistance)

In accordance with JIS K 6260, the resistance against crack generation of a test piece having no groove and the crack growth thereof were evaluated which were observed when repeated bending was given to the test piece by using a Demacha type bending tester. The measurement temperature was 23°C and the number of cases in which the test piece was cut off was recorded.
Note that in a case in which the test piece was not cut off even after bending for 500,000 times, the test was terminated and the condition of the test piece was visually confirmed.

[Production Example 1]

(Production of ethylene/propylene/VNB copolymer (A-1))

A continuous polymerization reaction of ethylene, propylene, and 5-vinyl-2-norbornene (VNB) was carried out at 87°C by using a 300 L polymerization vessel equipped with a stirring blade.
The polymerization vessel was continuously fed with ethylene so that its feed rate might be 3.6 kg/h, propylene 6.1 kg/h, VNB 290 g/h, and hydrogen 6.3 NL/h, with hexane as a polymerization solvent (feed rate: 32.6 L/h).
The polymerization vessel was continuously fed with di(p-tolyl)methylene(cyclopentadienyl) (octamethyloctahydrodib enzofluorenyl) zirconium dichloride as a main catalyst so that its feed rate might be 0.0015 mmol/h, with a polymerization pressure kept to be 1.6 MPaG and a polymerization temperature 87°C. Further, the polymerization vessel was continuously fed with $(C_6H_5)_3CB(C_6F_5)_4$ as a co-catalyst so that its feed rate might be 0.0075 mmol/h, and triisobutyl aluminum (TIBA) as an organoaluminum compound 20 mmol/h.
In this way, a solution was obtained which contained 15.2% by mass of ethylene/propylene/VNB copolymer formed from ethylene, propylene, and VNB. A small amount of methanol was added to the polymerization reaction solution extracted from the bottom of the polymerization vessel, to quench the polymerization reaction, and the ethylene/propylene/VNB copolymer was separated from the solvent by a steam stripping treatment, and then dried under reduced pressure at 80°C for 24 hours.
By the above operation, ethylene/propylene/VNB copolymer (A-1) formed from ethylene, propylene, and VNB was obtained at a rate of 4.7 kg/hr.
Physical properties of the obtained copolymer (A-1) were measured by the aforementioned methods. The results are listed in Table 1.
Hereinafter, the obtained copolymer (A-1) was also referred to as "VNB-EPT."

[Table 1]

Table 1

| Copolymer | A-1 |
|---|---|
| Ethylene content [% by mass] | 73.8 |
| Ethylene/Propylene [molar ratio] | 68/32 |
| VNB content [% by mass] | 1.43 |

(continued)

| Copolymer | A-1 |
|---|---|
| [η] [dl/g] | 2.88 |
| Mw | 318000 |
| Mw/Mn | 2.62 |
| B value | 1.20 |

In the Examples and Comparative Examples, the following commercially available products were used as well as the copolymer (A-1) .

(Ethylene/propylene/non-conjugated polyene copolymer)

Mitsui EPT 2060M: ethylene/propylene/ENB copolymer with ML(1+4) 125°C (ASTM D 1646) of 40, an ethylene content (ASTM D 3900) of 55 wt%, an ENB content (ASTM D 6047) of 2.3 wt% manufactured by Mitsui Chemicals, Inc.
Physical properties of Mitsui EPT 2060M are listed in Table 2.
Hereinafter, Mitsui EPT 2060M is also referred to as "ENB-EPT."

[Table 2]

Table 2

| Copolymer | 2060M |
|---|---|
| Ethylene content [% by mass] | 55 |
| Ethylene/Propylene [molar ratio] | 66/34 |
| ENB content [% by mass] | 2.3 |
| [η] [dl/g] | 2.16 |
| Mw | 161000 |
| Mw/Mn | 2.70 |
| B value | 1.00 |

(Acrylic-type rubber)

Vamac G: Composition containing ethylene acrylic rubber manufactured by DuPont
Nipol AR-12: Acrylic rubber containing alkyl acrylate as a main skeletal component manufactured by Zeon Corporation

Hereinafter, Vamac G is also referred to as "AEM" and Nipol AR-12 is also referred to as "ACM."

(Fluorine rubber)

Viton GBL-200S: Copolymer of hexafluoropropylene, vinylidene fluoride, tetrafluoroethylene, and a monomer to be a cured portion (olefin bromide) manufactured by DuPont
Hereinafter, Viton GBL-200S is also referred to as "FKM."

[Example 1]

(Preparation of composition containing VNB-EPT)

As a first step, 100 parts by mass of VNB-EPT was roughly kneaded for 30 seconds by a Banbury mixer, Model BB-2 (manufactured by KOBE STEEL, LTD.), to which copolymer were added 60 parts by mass of HAF carbon black (Asahi #70G, manufactured by Asahi Carbon Co., Ltd.), 5 parts by mass of zinc flower (manufactured by Hakusuitech Co., Ltd.), 1 part by mass of stearic acid, and 4 parts by mass of 4,4'-bis($\alpha$,$\alpha$-dimethylbenzyl)diphenylamine (NOCRAC CD manufactured by OUCHI SHINKO CHEMICAL INDUSTRIAL CO., LTD.), and then kneaded at 140°C for 2 minutes. Then, the ram of the mixer was raised to be cleaned, and they were kneaded for one more minute, and discharged at about 150°C to yield a compound of the first step.

Next, as a second step, the compound obtained in the first step was banded on a roll of an 8-inch roll mill (manufactured by Nippon Roll MFG. Co., Ltd., operating with a front roll at a surface temperature of 50°C and a rotational rate of 16 rpm and a back roll at a surface temperature of 50°C and a rotational rate of 18 rpm), and master batch (DCP-40c manufactured by Kayaku Akzo Corporation) containing 40% by mass of dicumyl peroxide as 3.4 parts by mass of the organic peroxide component (1.36 parts by mass in terms of organic peroxide) was added to the compound, which was then kneaded for 10 minutes to yield an uncrosslinked resin composition (rubber compound) (composition containing VNB-EPT).

(Preparation of composition containing AEM)

As a first step, 100 parts by mass of AEM was roughly kneaded for 30 seconds by a Banbury mixer, Model BB-2 (manufactured by KOBE STEEL, LTD.), to which copolymer were added 60 parts by mass of HAF carbon black (Asahi #70G, manufactured by Asahi Carbon Co., Ltd.), 1 part by mass of stearic acid, and 2 parts by mass of 4,4'-bis($\alpha$,$\alpha$-dimethylbenzyl)diphenylamine (NOCRAC CD manufactured by OUCHI SHINKO CHEMICAL INDUSTRIAL CO., LTD.), and then kneaded at 140°C for 2 minutes. Then, the ram of the mixer was raised to be cleaned, and they were kneaded for one more minute, and discharged at about 150°C to yield a compound of the first step.

Next, as a second step, the compound obtained in the first step was banded on a roll of an 8-inch roll mill (manufactured by Nippon Roll MFG. Co., Ltd., operating with a front roll at a surface temperature of 50°C at a rotational rate of 16 rpm and a back roll at a surface temperature 50°C and a rotational rate of 18 rpm), and 0.5 parts of Diak No.1 (DuPont) and 2.0 parts of NOCCELER-DT(Ouchi Shinko Chemical Industrial Co., Ltd.) were added to the compound, which was then kneaded for 10 minutes to yield an uncrosslinked resin composition (rubber compound) (composition containing AEM).

(Preparation and evaluation of layered product)

(Preparation of layered product for T-peel test)

The composition containing VNB-EPT and the composition containing AEM were each sheeted into a sheet-like shape. Next, 50 g of each of the unvulcanized rubber sheets (the sheets of the composition containing VNB-EPT and the composition containing AEM) was sandwiched between LUMIRRORs (stretched polyester (polyethylene terephthalate) film). Each unvulcanized rubber sheet sandwiched between LUMIRRORs was pressed at 120°C for 2 minutes using a 50-ton press-shaping machine to prepare a unvulcanized rubber sheet in 20 cm in square (t (thickness) =1 mm) .

Next, the unvulcanized rubber sheet obtained from the composition containing VNB-EPT (layer A) and the pressed unvulcanized rubber sheet obtained from the composition containing AEM (B layer) after the press were each cut into the press size described below (15 cm × 15 cm × t = mm). After cutting, the upper-side and lower-side LUMIRRORs were removed, and then the respective unvulcanized rubber sheets were stacked on each other. The unvulcanized rubber sheets were stacked on each other in a manner such that a Teflon (registered trademark) resin sheet (t = 0.2 mm) is sandwiched between the unvulcanized rubber sheets at a certain part (width of 3 cm, length of 15 cm: margin for peel test).

The stacked unvulcanized rubber sheets sandwiching the Teflon (registered trademark) resin sheet at the certain part was pressed (main press) at 180°C for 10 minutes using a 100-ton press-shaping machine to prepare a crosslinked rubber sheet (layered product) of 2 mm in thickness.

The Teflon (registered trademark) resin sheet was removed from the resulting crosslinked rubber sheet (layered product), and T-peel test of the crosslinked rubber sheet (layered product) was conducted.

(Preparation of layered product for surface swelling test)

The composition containing VNB-EPT was sheeted into a sheet-like shape. Next, 200 g of the unvulcanized rubber sheet (the sheets of the composition containing VNB-EPT) was sandwiched between LUMIRRORs (stretched polyester (polyethylene terephthalate) film). The unvulcanized rubber sheet sandwiched between LUMIRRORs was pressed at 120°C for 2 minutes using a 50-ton press-shaping machine to prepare a unvulcanized rubber sheet (layer A) in 20 cm in square (t (thickness) = 4 mm).
The composition containing AEM was sheeted into a sheet-like shape. Next, 50 g of the unvulcanized rubber sheet (the sheets of the composition containing AEM) was sandwiched between LUMIRRORs (stretched polyester (polyethylene terephthalate) film). The unvulcanized rubber sheet sandwiched between LUMIRRORs was pressed at 120°C for 2 minutes using a 50-ton press-shaping machine to prepare a unvulcanized rubber sheet (layer B) in 20 cm in square (t (thickness) = 1 mm).
After LUMIRRORs on the upper side and lower side of each of the unvulcanized rubber sheets (layer A and layer B) were removed, the unvulcanized rubber sheet (layer A) obtained from the composition containing VNB-EPT and the unvulcanized rubber sheet (layer B) obtained from the composition containing AEM were stacked and pressed at 180°C for 10 minutes using a 100-ton press-shaping machine to prepare a crosslinked rubber sheet (layered product) of 5 mm in thickness. A surface swelling test of a crosslinked shaped article was conducted using the obtained product.

[Example 2]

A composition containing VNB-EPT and a composition containing AEM were prepared in the same manner as in Example 1.

(Preparation and evaluation of layered product)

(Preparation of layered product for T-peel test)

The unvulcanized rubber sheet (layer A) obtained from the composition containing VNB-EPT and the unvulcanized rubber sheet (layer B) obtained from the composition containing AEM, which were cut into a main press size (15 cm × 15 cm × t = 1 mm), were obtained by the same method as in Example 1.
An adhesive (Chemlok XJ150 (manufactured by Chemlok)) was applied to one side of the layer A using a brush and dried for 10 minutes. Then, the cut unvulcanized rubber sheets were stacked thereon. The unvulcanized rubber sheets were stacked on each other in a manner such that a Teflon (registered trademark) resin sheet (t = 0.2 mm) is sandwiched between the unvulcanized rubber sheets at a certain part (width of 3 cm, length of 15 cm: margin for peel test). In addition, the layer A and the layer B were stacked such that they were adjacent via the adhesive.
The crosslinked rubber sheet (layered product) of 2 mm in thickness was obtained from the stacked unvulcanized rubber sheets sandwiching the Teflon (registered trademark) resin sheet at the certain part by the same method as in Example 1.
The Teflon (registered trademark) resin sheet was removed from the resulting crosslinked rubber sheet (layered product), and T-peel test of the crosslinked rubber sheet (layered product) was conducted.

(Preparation of layered product for surface swelling test)

The unvulcanized rubber sheet (layer A) obtained from the composition containing VNB-EPT and the unvulcanized rubber sheet (layer B) obtained from the composition containing AEM were obtained by the same method as in Example 1.
An adhesive (Chemlok XJ150 (manufactured by Chemlok)) was applied to one side of the layer A using a brush and dried for 10 minutes. Then, the unvulcanized rubber sheet (layer A) obtained from the composition containing VNB-EPT and the unvulcanized rubber sheet (layer B) obtained from the composition containing AEM were stacked such that the layer A and the layer B were adjacent to each other via an adhesive, and pressed at 180°C for 10 minutes using a 100-ton press-shaping machine to prepare a crosslinked rubber sheet (layered product) of 5 mm in thickness. A surface swelling test of a crosslinked shaped article was conducted using the obtained product.

[Example 3]

A composition and a sheet (layered product) were prepared and physical properties thereof were evaluated in the same manner as in Example 1 except that AEM in Example 1 was replaced by ACM.

[Example 4]

A composition and a sheet (layered product) were prepared and physical properties thereof were evaluated in the same manner as in Example 2 except that AEM in Example 2 was replaced by ACM.

[Example 5]

A composition and a sheet (layered product) were prepared and physical properties thereof were evaluated in the same manner as in Example 1 except that AEM in Example 1 was replaced by FKM. Note that in consideration of specific gravities of AEM and FKM, 50 g of the unvulcanized rubber sheet (a sheet of a composition containing AEM) sheeted in Example 1 was replaced by 100 g of the sheeted unvulcanized rubber sheet (a sheet of a composition containing FKM).

[Reference Example 6]

A composition and a sheet (layered product) were prepared and physical properties thereof were evaluated in the same manner as in Example 5 except that VNB-EPT in Example 5 was replaced by ENB-EPT.

[Reference Example 1]

A composition and a sheet (layered product) were prepared and physical properties thereof were evaluated in the same manner as in Example 1 except that VNB-EPT in Example 1 was replaced by AEM, and AEM in Example 1 was replaced by FKM. Note that in consideration of specific gravities of AEM and FKM, 50 g of the unvulcanized rubber sheet (a sheet of a composition containing AEM) sheeted in Example 1 was replaced by 100 g of the sheeted unvulcanized rubber sheet (a sheet of a composition containing FKM) .

[Comparative Example 1]

A composition containing VNB-EPT was prepared in the same manner as in Example 1.

A composition containing VNB-EPT was sheeted into a sheet-like shape and pressed at 120°C for 2 minutes using a 50-ton press-shaping machine to prepare an unvulcanized rubber sheet in 20 cm in square sandwiched with LUMIRROR (t = 5 mm) (A layer).

Next, the unvulcanized rubber sheet (layer A) obtained from the composition containing VNB-EPT was pressed at 180°C for 10 minutes using a 100-ton press-shaping machine to prepare a crosslinked rubber sheet (monolayer product) of 5 mm in thickness. A surface swelling test of a crosslinked shaped article was conducted using the obtained product.

[Table 3]

Table 3

| | | Example 1 | Example 2 | Example 3 | Example 4 | Example 5 | Reference Example 6 | Reference Example 1 | Comparative Example 1 |
|---|---|---|---|---|---|---|---|---|---|
| Layer A | | VNB-EP T | VNB-EP T | VNB-EP T | VNB-EP T | VNB-EP T | ENB-EPT | AEM | VNB-EPT |
| Layer B | | AEM | AEM | ACM | ACM | FKM | FKM | FKM | Not used |
| Adhesive | | Not used | Used | Not used | Used | Not used | Not used | Not used | - |
| T-peel test | N/c m | 3.7 | 34.4 | 0.5 | 0.5 | 20.4 | 19.5 | 29.0 | - |
| Surface swelling test (o: No swelling, ×: Swelling) | | | | | | | | | |
| Test oil IRM903: 2.4 g | | | | | | | | | |
| 80°C, 3 h later | | ○ | ○ | ○ | ○ | ○ | ○ | ○ | × |
| 80°C, 6 h later | | ○ | ○ | ○ | ○ | ○ | ○ | ○ | × |
| 80°C, 9 h later | | ○ | ○ | ○ | ○ | ○ | ○ | ○ | × |

[Example 7]

(Preparation of composition containing VNB-EPT)

As a first step, 100 parts by mass of VNB-EPT was roughly kneaded for 1 seconds by a Banbury mixer, Model BB-2 (manufactured by KOBE STEEL, LTD.), to which copolymer were added 30 parts by mass of FEF carbon black (Asahi #60G, manufactured by Asahi Carbon Co., Ltd.), 45 parts by mass of SRF carbon black (Asahi #50G, manufactured by Asahi Carbon Co., Ltd.), 40 parts by mass of FT carbon black (Asahi #15HS, manufactured by Asahi Carbon Co., Ltd.), 5 parts by mass of zinc flower (manufactured by Hakusuitech Co., Ltd.), 1 part by mass of stearic acid, and 4 parts by mass of 4,4'-bis($\alpha$,$\alpha$-dimethylbenzyl)diphenylamine (NOCRAC CD manufactured by OUCHI SHINKO CHEMICAL INDUSTRIAL CO., LTD.), 3 parts by mass of LIPOQUAD 2HTF (manufactured by Lion Specialty Chemicals Co., Ltd.), and 47 parts by mass of Diana Process Oil PS-430(manufactured by Idemitsu Kosan Co., Ltd.), and they were kneaded at 140°C for 2 minutes. Then, the ram of the mixer was raised to be cleaned, and they were kneaded for one more minute, and discharged at about 150°C to yield a compound of the first step.

Next, as a second step, the compound obtained in the first step was banded on an roll of an 8-inch roll mill (manufactured by Nippon Roll MFG. Co., Ltd., operating with a front roll at a surface temperature of 50°C and a rotational rate of 18 rpm and a back roll at a surface temperature of 50°C and a rotational rate of 15 rpm), and master batch (perhexa 25B-40, Manufactured by NOF Corporation) (2.2 parts by mass in terms of organic peroxide) containing 40% by mass of 2,5-dimethyl-2,5-di-(tert-butylperoxy) hexane as 5.5 parts by mass of the organic peroxide component (2.2 parts by mass in terms of organic peroxide) was added to the compound, which was then kneaded for 10 minutes to yield an uncrosslinked resin composition (rubber compound) (composition containing VNB-EPT).

(Composition containing fluorine rubber)

As a composition containing fluorine rubber, DAI-EL DC-2270F (manufactured by Daikin Industries, Ltd.: polyol crosslinked-type fluorine rubber compound) was used. DAI-EL DC-2270F is a composition containing a polyol-based crosslinking agent (bisphenol AF), a crosslinking enhancer (quaternary onium salt), a filler, and an acid acceptor, in addition to fluorine rubber.

(Preparation and evaluation of layered product)

(Preparation of layered product for T-peel test)

The composition containing VNB-EPT and the composition containing fluorine rubber were each sheeted into a sheet-like shape. Next, 100 g of each of the unvulcanized rubber sheets (the sheets of the composition containing VNB-EPT and the composition containing fluorine rubber) was sandwiched between LUMIRRORs (stretched polyester (polyethylene terephthalate) film). Each unvulcanized rubber sheet sandwiched between LUMIRRORs was pressed at 120°C for 2 minutes using a 50-ton press-shaping machine to prepare a unvulcanized rubber sheet in 20 cm in square (t (thickness) = 1 mm) .

Next, the unvulcanized rubber sheet obtained from the composition containing VNB-EPT (layer A) and the pressed unvulcanized rubber sheet obtained from the composition containing fluorine rubber (layer B) after the press were each cut into the press size described below (15 cm × 15 cm × t = 1 mm) . After cutting, the upper-side and lower-side LUMIRRORs were removed, and then the respective unvulcanized rubber sheets were stacked on each other. The unvulcanized rubber sheets were stacked on each other in a manner such that a Teflon (registered trademark) resin sheet (t = 0.2 mm) is sandwiched between the unvulcanized rubber sheets at a certain part (width of 3 cm, length of 15 cm: margin for peel test).

The stacked unvulcanized rubber sheets sandwiching the Teflon (registered trademark) resin sheet at the certain part was pressed (main press) at 180°C for 10 minutes using a 100-ton press-shaping machine to prepare a primarily vulcanized crosslinked rubber sheet (layered product) of 2 mm in thickness.

The Teflon (registered trademark) resin sheet was removed from the resulting crosslinked rubber sheet (layered product), and the crosslinked rubber sheet (layered product) was placed in an oven at 180°C for 4 hours for carrying out secondary vulcanization to yield a crosslinked rubber sheet (layered product).

Two primarily vulcanized crosslinked rubber sheets (layered products) and two secondarily vulcanized crosslinked rubber sheets (layered products) were produced, and T-peel test of these crosslinked rubber sheets (layered products) was conducted.

[Example 8]

(Preparation of composition containing VNB-EPT)

An uncrosslinked resin composition (rubber compound) (composition containing VNB-EPT) was obtained in the same manner as in Example 7 except that LIPOQUAD 2HTF was not used.

(Composition containing fluorine rubber)

As a composition containing fluorine rubber, DAI-EL DC-4070 (manufactured by Daikin Industries, Ltd.) was used. DAI-EL DC-4070 is a composition containing an organic peroxide (2,5-dimethyl-2,5-di-(tert-butylperoxy) hexane) and a filler, in addition to fluorine rubber.

(Preparation and evaluation of layered product)

(Preparation of layered product for T-peel test)

A crosslinked rubber sheet (layered product) was obtained using the composition containing VNB-EPT and the composition containing fluorine rubber in the same method as in Example 7, and T-peel test of a primarily vulcanized crosslinked rubber sheet (layered product) and a secondarily vulcanized crosslinked rubber sheet (layered product) thereof was conducted.

[Table 4]

Table 4

| | | Example 7 | Example 8 |
|---|---|---|---|
| [Composition formulation containing VNB-EPT] | | | |
| VNB-EPT | Parts by mass | 100 | 100 |
| Stearic acid | Parts by mass | 1 | 1 |
| MgO | Parts by mass | 5 | 5 |
| FEF carbon (Asahi 60G) | Parts by mass | 30 | 30 |
| SRF carbon (Asahi 50G) | Parts by mass | 45 | 45 |
| FT carbon (Asahi 15HS) | Parts by mass | 40 | 40 |
| NOCRAC CD | Parts by mass | 4 | 4 |
| LIPOQUAD 2HTF | Parts by mass | 3 | |
| PS-430 | Parts by mass | 47 | 47 |
| PERHEXA 25B40 | Parts by mass | 5.5 | 5.5 |
| | Total | 280.5 | 277.5 |

(continued)

| Composition containing fluorine rubber | | DC2270F | DC4070 |
|---|---|---|---|
| T-peel test | | Primarily vulcanized product | Primarily vulcanized product |
| | N/cm | 6.1 | 23.7 |
| | N/cm | 6.3 | 20.6 |
| | Average | 6.2 | 22.2 |
| | | Secondarily vulcanized product | Secondarily vulcanized product |
| | NIcm | 12.3 | 26.4 |
| | N/cm | 11.7 | 26.6 |
| | Average | 12.0 | 26.5 |

[Example 9]

As a first step, 100 parts by mass of VNB-EPT was roughly kneaded for 30 seconds by a Banbury mixer, Model BB-2 (manufactured by KOBE STEEL, LTD.), to which copolymer were added 60 parts by mass of HAF carbon black (Asahi #70G, manufactured by Asahi Carbon Co., Ltd.), 5 parts by mass of zinc flower, 1 part by mass of stearic acid, and 4 parts by mass of 4,4'-bis($\alpha$,$\alpha$-dimethylbenzyl)diphenylamine (NOCRAC CD manufactured by OUCHI SHINKO CHEMICAL INDUSTRIAL CO., LTD.), and then kneaded at 140°C for 2 minutes. Then, the ram of the mixer was raised to be cleaned, and they were kneaded for one more minute, and discharged at about 150°C to yield a compound of the first step.

Next, as a second step, the compound obtained in the first step was banded on a roll of an 8-inch roll mill (manufactured by Nippon Roll MFG. Co., Ltd., operating with a front roll at a surface temperature of 50°C and a rotational rate of 16 rpm and a back roll at a surface temperature of 50°C and a rotational rate of 18 rpm), and master batch (DCP-40c manufactured by Kayaku Akzo Corporation) containing 40% by mass of dicumyl peroxide as 3.4 parts by mass of the organic peroxide component (1.36 parts by mass in terms of organic peroxide) was added to the compound, which was then kneaded for 10 minutes to yield an uncrosslinked resin composition (rubber compound).

This resin composition was sheeted into a sheet-like shape and pressed at 180°C for 10 minutes using a 100-ton press-shaping machine to prepare a crosslinked rubber sheet of 2 mm in thickness. This sheet was used to evaluate various physical properties of the crosslinked shaped article. The results are listed in Table 5.

[Example 10]

A crosslinked rubber sheet was obtained in the same manner as in Example 9 except that VNB-EPT was replaced by ENB-EPT, and physical properties thereof were evaluated. The results are listed in Table 5.

[Reference Example 2]

A crosslinked rubber sheet was obtained in the same manner as in Example 9 except that the compositions (parts by mass) of the compound in the first step and the compound in the second step were changed to those listed in Table 5, and physical properties thereof were evaluated. The results are listed in Table 5.

Note that PHOSPHANOL RL-210 (TOHO CHEMICAL INDUSTRY Co., Ltd.) used in the Examples and Reference Examples is an ester-based wax, Diak No.1 (DuPont) is hexamethylene diamine carbamate, and NOCCELER-DT (Ouchi Shinko Chemical Industrial Co., Ltd.) is 1,3-di-o-tolylguanidine.

Although this invention relates to a layered product, in order to evaluate physical properties of each layer constituting a layered product, a monolayer crosslinked rubber sheet was obtained and evaluated in Examples 9 and 10 and Reference Example 2.

[Table 5]

Table 5

| | | Example 9 | Example 10 | Reference Example 2 |
|---|---|---|---|---|
| Composition Formulation | | | | |
| First step | Polymer | | | |
| | VNB-EPT (polymerized product) | 100 | | |
| | Mitsui EPT 2060M (Mitsui Chemicals, Inc.) | | 100 | |
| | Vamac G (AEM, DuPont) | | | 100 |
| | Compounded agent | | | |
| | HAF carbon black | 60 | 60 | 60 |
| | Zinc flower | 5 | 5 | |
| | Stearic acid | 1 | 1 | 1 |
| | NOCRAC CD (Ouchi Shinko Chemical Industrial Co., Ltd.) | 4.0 | 4.0 | |
| Second step | DCP40C | 3.4 | 3.4 | |
| | PHOSPHANOL RL-210 (TOHO Chemical Industry Co., Ltd.) | | | 1.0 |
| | Diak No.1 (DuPont) | | | 0.5 |
| | NOCCELER DT (Ouchi Shinko Chemical Industrial Co., Ltd.) | | | 2.0 |
| Test results | | | | |
| <Ordinary physical properties> 180°C × 10-minute vulcanization | | | | |
| Hardness (shoreA) | | 70 | 71 | 74 |
| M100 [MPa] | | 1.7 | 1.5 | 2.6 |
| M200[MPa] | | 3.4 | 2.0 | 5.3 |
| M300[MPa] | | 6.2 | 3.0 | 7.7 |
| TB[MPa] | | 15.6 | 6.3 | 11.6 |
| EB[%] | | 619 | 643 | 646 |
| <Heat aging resistance>180°C × 168 h later | | | | |
| Hardness (shoreA) | | 73 | 76 | 85 |
| TB [MPa] | | 7.8 | 3.2 | 7.0 |
| EB [%] | | 297 | 129 | 317 |
| < Demacha bending fatigue > | | | | |
| Ordinary temperature, no scratch | | > 500,000 times | Cut off at 300,000 times | > 500,000 times |
| Remarks: Conditions of test piece | | No recess | | Recess formed after 100,000 times |

[Example 11]

(Preparation of composition containing VNB-EPT)

As a first step, 100 parts by mass of VNB-EPT was roughly kneaded for 1 seconds by a Banbury mixer, Model BB-2 (manufactured by KOBE STEEL, LTD.), to which copolymer were added 30 parts by mass of FEF carbon black (Asahi #60G, manufactured by Asahi Carbon Co., Ltd.), 45 parts by mass of SRF carbon black (Asahi #50G, manufactured by Asahi Carbon Co., Ltd.), 40 parts by mass of FT carbon black (Asahi #15HS, manufactured by Asahi Carbon Co., Ltd.), 5 parts by mass of Kyowamag 150 (manufactured by Kyowa Chemical Industry Co., Ltd., magnesium oxide), 1 part by mass of stearic acid, and 4 parts by mass of 4,4'-bis($\alpha$,$\alpha$-dimethylbenzyl)diphenylamine (NOCRAC CD manufactured by OUCHI SHINKO CHEMICAL INDUSTRIAL CO., LTD.), 3 parts by mass of LIPOQUAD 2HT Flake (manufactured by Lion Specialty Chemicals Co., Ltd.), and 47 parts by mass of Diana Process Oil PS-430(manufactured by Idemitsu Kosan Co., Ltd.), and they were kneaded at 140°C for 2 minutes. Then, the ram of the mixer was raised to be cleaned, and they were kneaded for one more minute, and discharged at about 150°C to yield a compound of the first step.

Next, as a second step, the compound obtained in the first step was banded on a roll of an 8-inch roll mill (manufactured by Nippon Roll MFG. Co., Ltd., operating with a front roll at a surface temperature of 50°C and a rotational rate of 18 rpm and a back roll at a surface temperature of 50°C and a rotational rate of 15 rpm), and 3 parts by mass of master batch (perhexa 25B-40, Manufactured by NOF Corporation) (1.2 parts by mass in terms of organic peroxide) containing 40% by mass of 2,5-dimethyl-2,5-di-(tert-butylperoxy) hexane as 3 parts by mass of the organic peroxide component, and 3 parts by mass of Hi-Cross M (Seiko Chemical Co., Ltd., a crosslinking aid) were added to the compound, which was then kneaded for 10 minutes to yield an uncrosslinked resin composition (rubber compound) (composition containing VNB-EPT).

(Composition containing fluorine rubber)

As a composition containing fluorine rubber, DAI-EL DC-2270F (manufactured by Daikin Industries, Ltd.: polyol crosslinked-type fluorine rubber compound) was used. DAI-EL DC-2270F is a composition containing a polyol-based crosslinking agent (bisphenol AF), a crosslinking enhancer (quaternary onium salt), a filler, and an acid acceptor, in addition to fluorine rubber.

(Preparation and evaluation of layered product)

(Preparation of layered product for T-peel test)

The composition containing VNB-EPT and the composition containing fluorine rubber were each sheeted into a sheet-like shape. Next, 100 g of each of the unvulcanized rubber sheets (the sheets of the composition containing VNB-EPT and the composition containing fluorine rubber) was sandwiched between LUMIRRORs (stretched polyester (polyethylene terephthalate) film). Each unvulcanized rubber sheet sandwiched between LUMIRRORs was pressed at 120°C for 2 minutes using a 50-ton press-shaping machine to prepare a unvulcanized rubber sheet in 20 cm in square (t (thickness) = 1 mm) .

Next, the unvulcanized rubber sheet obtained from the composition containing VNB-EPT (layer A) and the pressed unvulcanized rubber sheet obtained from the composition containing fluorine rubber (layer B) after the press were each cut into the press size described below (15 cm $\times$ 15 cm $\times$ t = 1 mm) . After cutting, the upper-side and lower-side LUMIRRORs were removed, and then the respective unvulcanized rubber sheets were stacked on each other. The unvulcanized rubber sheets were stacked on each other in a manner such that a Teflon (registered trademark) resin sheet (t = 0.2 mm) is sandwiched between the unvulcanized rubber sheets at a certain part (width of 3 cm, length of 15 cm: margin for peel test).

The stacked unvulcanized rubber sheets sandwiching the Teflon (registered trademark) resin sheet at the certain part was pressed (main press) at 180°C for 10 minutes using a 100-ton press-shaping machine to prepare a primarily vulcanized crosslinked rubber sheet (layered product) of 2 mm in thickness.

The Teflon (registered trademark) resin sheet was removed from the resulting crosslinked rubber sheet (layered product), and the crosslinked rubber sheet (layered product) was placed in an oven at 180°C for 4 hours for carrying out secondary vulcanization to yield a crosslinked rubber sheet (layered product).

T-peel test of the secondarily vulcanized crosslinked rubber sheet (layered product) was conducted.

[Example 12]

This Example was conducted in the same manner as in Example 11 except that the compound in the first step

was obtained using 20 parts by mass of DHT-4A (manufactured by Kyowa Chemical Industry Co., Ltd., hydrotalcite compound: $Mg_{4.3}A_{12}(OH)_{12.6}CO_3/mH_2O$).

[Example 13]

This Example was conducted in the same manner as in Example 11 except that the amount of Kyowamag 150 used was changed from 5 parts by mass to 25 parts by mass to obtain the compound in the first step.
The formulations of the compositions containing VNB-EPT in Examples 11 to 13, the composition of containing fluorine rubber, and the results of T-peel test are listed in Table 6.

[Table 6]

Table 6

| | | Example 11 | Example 12 | Example 13 |
|---|---|---|---|---|
| [Composition formulation containing VNB-EPT] | | | | |
| VNB-EPT | Parts by mass | 100 | 100 | 100 |
| LIPOQUAD 2HT FLAKE | Parts by mass | 3 | 3 | 3 |
| DHT-4A | Parts by mass | | 20 | |
| Kyowamag 150 | Parts by mass | 5 | 5 | 25 |
| Stearic acid | Parts by mass | 1 | 1 | 1 |
| Asahi #60 | Parts by mass | 30 | 30 | 30 |
| Asahi #50 | Parts by mass | 45 | 45 | 45 |
| Asahi #15HS | Parts by mass | 40 | 40 | 40 |
| PS-430 | Parts by mass | 47 | 47 | 47 |
| PERHEXA 25B-40 | Parts by mass | 3 | 3 | 3 |
| Hi-Cross M | Parts by mass | 3 | 3 | 3 |
| NOCRAC CD | Parts by mass | 4 | 4 | 4 |
| | Total | 281 | 301 | 301 |
| Composition containing fluorine rubber | | DC-2270F | DC-2270F | DC-2270F |
| T-peel test | N/cm | 12.0 | 22.2 | 19.8 |

## Claims

**1.** A layered product comprising the following layer (1) and at least one type of layer selected from the following layers (3) and (4),
wherein the layer (1) is directly in contact with or adjacent via an adhesive layer to at least one layer of the at least one type of layer selected from the layers (3) and (4):

layer (1): a layer prepared by crosslinking using an ethylene/propylene/non-conjugated polyene copolymer;
layer (3): a layer prepared by crosslinking using an acrylic-type rubber; and
layer (4): a layer prepared by crosslinking using a halogen-containing polymer,
wherein the ethylene/propylene/non-conjugated polyene copolymer satisfies the following requirements (I) to (IV):

requirement (I) : a molar ratio of a structural unit derived from ethylene and a structural unit derived from a propylene (ethylene/ propylene) is from 40/60 to 99.9/0.1;
requirement (II): a structural unit derived from a non-conjugated polyene accounts for 0.07% to 10% by

mass with respect to 100% by mass of the ethylene/propylene/non-conjugated polyene copolymer;
requirement (III): an intrinsic viscosity [η] measured in decalin at 135°C is from 1.0 to 4.0dl/g; and
requirement (IV): a B value expressed by the following formula (i) for the ethylene/propylene/non-conjugated polyene copolymer is 1.20 or more.

$$B\ value = ([EX] + 2[Y])/[2 \times [E] \times ([X] + [Y])] \quad (i)$$

[where [E], [X], and [Y] represent molar fractions of ethylene, a propylene, and a non-conjugated polyene, respectively, and [EX] represents an ethylene-propylene diad chain fraction], and
wherein the ethylene/propylene/non-conjugated polyene copolymer has a structural unit derived from 5 - vinyl - 2 - norbornene (VNB) .

**2.** The layered product according to claim 1, wherein the layer (1) contains 0.2 parts by mass or more of an onium salt with respect to 100 parts by mass of the copolymer, and further contains 7 parts by mass or more of an inorganic compound containing oxygen and at least one element selected from Group 2 elements and Group 13 elements with respect to 100 parts by mass of the copolymer.

**3.** The layered product according to claim 1, wherein the layer (1) contains from 0.2 parts by mass to 10 parts by mass of an onium salt with respect to 100 parts by mass of the copolymer, and further contains from 7 parts by mass to 100 parts by mass of an inorganic compound containing oxygen and at least one element selected from Group 2 elements and Group 13 elements with respect to 100 parts by mass of the copolymer.

**4.** The layered product according to any one of claims 1 to 3, wherein the layer (1) and the layer (4) are directly in contact with each other.

**5.** The layered product according to any one of claims 1 to 4, wherein the layer (1) is bonded to the layer (3) via the adhesive layer.

**6.** A hose comprising the layered product according to any one of claims 1 to 5 as at least a part thereof.

**7.** Use of the hose according to claim 6 in any one of applications for an automobile, a motorbike, industrial machinery, construction machinery, and agricultural machinery.

**8.** Use of the hose according to claim 7 for a turbocharger hose for an automobile.

**Patentansprüche**

**1.** Geschichtetes Produkt, umfassend die folgende Schicht (1) und wenigstens eine Art von Schicht, ausgewählt aus den folgenden Schichten (3) und (4),
wobei die Schicht (1) über eine Klebeschicht mit wenigstens einer Schicht der wenigstens einen Art von Schicht, die aus den Schichten (3) und (4) ausgewählt ist, direkt in Kontakt steht oder an diese angrenzt:

Schicht (1): eine durch Vernetzung unter Verwendung eines Ethylen/Propylen/nicht konjugierten Polyen-Copolymers hergestellte Schicht;
Schicht (3): eine durch Vernetzung unter Verwendung eines Kautschuks des Acryltyps hergestellte Schicht; und
Schicht (4): eine durch Vernetzung unter Verwendung eines halogenhaltigen Polymers hergestellte Schicht,
wobei das Ethylen/Propylen/nicht konjugierte Polyen-Copolymer die folgenden Anforderungen (I) bis (IV) erfüllt:

Anforderung (I): ein molares Verhältnis einer von Ethylen abgeleiteten Struktureinheit und einer von Propylen abgeleiteten Struktureinheit (Ethylen/Propylen) beträgt von 40/60 bis 99,9/0,1;
Anforderung (II): eine Struktureinheit, die von einem nicht-konjugierten Polyen abgeleitet ist, macht 0,07 bis 10 Masse-% in Bezug auf 100 Masse-% des Ethylen/Propylen/nicht-konjugierten Polyen-Copolymers aus;
Anforderung (III): eine intrinsische Viskosität [η], gemessen in Decalin bei 135°C beträgt von 1,0 bis 4,0 dl/g; und
Anforderung (IV): ein B-Wert, der durch die folgende Formel (i) ausgedrückt wird, für das Ethylen/Propylen/nicht-konjugierten Polyen-Copolymer beträgt 1,20 oder mehr.

$$\text{B-Wert} = ([EX] + 2[Y])/[2 \times [E] \times ([X] + [Y])] \quad (i)$$

[wobei [E], [X] und [Y] molare Fraktionen von Ethylen, einem Propylen beziehungsweise einem nicht-konjugierten Polyen darstellen und [EX] eine Ethylen-Propylen-Diaden-Kettenfraktion darstellt], und wobei das Ethylen/Propylen/nicht-konjugierte Polyen-Copolymer eine Struktureinheit aufweist, die von 5-Vinyl-2-Norbornen (VNB) abgeleitet ist.

**2.** Geschichtetes Produkt nach Anspruch 1, wobei die Schicht (1) 0,2 Masseteile oder mehr eines Onium-Salzes, bezogen auf 100 Masseteile des Copolymers, und ferner 7 Masseteile oder mehr einer anorganischen Verbindung enthält, die Sauerstoff und wenigstens ein Element, ausgewählt aus Elementen der Gruppe 2 und Elementen der Gruppe 13, enthält, bezogen auf 100 Masseteile des Copolymers.

**3.** Geschichtetes Produkt nach Anspruch 1, wobei die Schicht (1) 0,2 Masseteile bis 10 Masseteile eines Onium-Salzes, bezogen auf 100 Masseteile des Copolymers, und ferner 7 Masseteile bis 100 Masseteile einer Sauerstoff enthaltenden anorganischen Verbindung und wenigstens ein Element enthält, ausgewählt aus Elementen der Gruppe 2 und Elementen der Gruppe 13 bezogen auf 100 Masseteile des Copolymers.

**4.** Geschichtetes Produkt nach einem der Ansprüche 1 bis 3, wobei die Schicht (1) und die Schicht (4) direkt miteinander in Kontakt stehen.

**5.** Geschichtetes Produkt nach einem der Ansprüche 1 bis 4, wobei die Schicht (1) über die Klebeschicht mit der Schicht (3) gebunden ist.

**6.** Schlauch, umfassend das geschichtete Produkt nach einem der Ansprüche 1 bis 5 als wenigstens einen Teil davon.

**7.** Verwendung des Schlauchs nach Anspruch 6 in einer der Anwendungen für ein Automobil, ein Motorrad, eine Industriemaschine, eine Baumaschine oder eine Landmaschine.

**8.** Verwendung des Schlauches nach Anspruch 7 für einen Turboladerschlauch für ein Automobil.

## Revendications

**1.** Produit stratifié comprenant la couche suivante (1) et au moins un type de couche choisi parmi les couches suivantes (3) et (4),
dans lequel la couche (1) est directement en contact avec ou adjacente via une couche adhésive à au moins une couche de l'au moins un type de couche choisi parmi les couches (3) et (4) :

couche (1) : une couche préparée par réticulation à l'aide d'un copolymère éthylène/propylène/polyène non conjugué ;
couche (3) : une couche préparée par réticulation à l'aide d'une gomme de type acrylique ; et
couche (4) : une couche préparée par réticulation à l'aide d'un polymère halogéné, dans lequel le copolymère éthylène/propylène/polyène non conjugué satisfait aux exigences suivantes (1) à (IV) :

exigence (I) : un rapport molaire d'une unité structurale dérivée de l'éthylène et d'une unité structurale dérivée d'un propylène (éthylène/propylène) est de 40/60 à 99,9/0,1 ;
exigence (II) : une unité structurale dérivée d'un polyène non conjugué représente 0,07 à 10 % en masse pour 100 % en masse du copolymère éthylène/propylène/polyène non conjugué ; exigence (III) : une viscosité intrinsèque [η] mesurée dans la décaline à 135°C est de 1,0 à 4,0 dl/g ; et
exigence (IV) : une valeur B exprimée par la formule (i) suivante pour le copolymère éthylène/propylène/polyène non conjugué est de 1,20 ou plus.

$$\text{Valeur B} = ([EX] + 2[Y]) / [2 \times [E] \times ([X] + [Y])] \quad (i)$$

[où [E], [X] et [Y] représentent des fractions molaires d'éthylène, d'un propylène et d'un polyène non conjugué, respectivement, et [EX] représente une fraction de chaîne de diade éthylène-propylène], et dans lequel le copolymère éthylène/propylène/polyène non conjugué a une unité structurale dérivée du 5-vinyl-2-norbornène (VNB).

**2.** Produit stratifié selon la revendication 1, dans lequel la couche (1) contient 0,2 partie en masse ou plus d'un sel d'onium par rapport à 100 parties en masse du copolymère, et contient en outre 7 parties en masse ou plus d'un composé inorganique contenant de l'oxygène et au moins un élément choisi parmi les éléments du groupe 2 et les éléments du groupe 13 par rapport à 100 parties en masse du copolymère.

**3.** Produit stratifié selon la revendication 1, dans lequel la couche (1) contient de 0,2 partie en masse à 10 parties en masse d'un sel d'onium par rapport à 100 parties en masse du copolymère, et contient en outre de 7 parties en masse à 100 parties en masse d'un composé inorganique contenant de l'oxygène et au moins un élément choisi parmi les éléments du groupe 2 et les éléments du groupe 13 par rapport à 100 parties en masse du copolymère.

**4.** Produit stratifié selon l'une quelconque des revendications 1 à 3, dans lequel la couche (1) et la couche (4) sont directement en contact l'une avec l'autre.

**5.** Produit stratifié selon l'une quelconque des revendications 1 à 4, dans lequel la couche (1) est liée à la couche (3) via la couche adhésive.

**6.** Tuyau comprenant le produit stratifié selon l'une quelconque des revendications 1 à 5 en tant qu'au moins une partie de celui-ci.

**7.** Utilisation du tuyau selon la revendication 6 dans l'une quelconque des applications pour une automobile, une moto, des machines industrielles, des machines de construction et des machines agricoles.

**8.** Utilisation du tuyau selon la revendication 7 pour un tuyau de turbocompresseur pour une automobile.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005523181 A
- WO 2003039858 A
- JP 2009500473 A
- JP 2013221580 A
- JP 2014162823 A
- US 2003207118 A1
- JP 2007098900 A
- JP 2008195039 A
- WO 0216112 A1
- WO 2005100410 A
- WO 2006123759 A
- WO 0127124 A
- JP 2004168744 A
- JP 2004175759 A
- JP 2000212194 A
- JP H278687 A
- JP H1501950 A
- JP H1502036 A
- JP H3179005 A
- JP H3179006 A
- JP H3207703 A
- JP H3207704 A
- US 5321106 A
- JP H11147891 A


### Non-patent literature cited in the description


- **J. C. RANDALL.** *Macromolecules,* 1982, vol. 15, 353
- **J. RAY.** *Macromolecules,* 1977, vol. 10, 773
- *J. Organomet. Chem.,* 1996, vol. 63, 509